# EUROPÄISCHE PATENTSCHRIFT

(11) **EP 4 015 338 B1**
(45) Veröffentlichungstag und Bekanntmachung des Hinweises auf die Patenterteilung: **03.12.2025**
(21) Anmeldenummer: 21215474.4
(22) Anmeldetag: 17.12.2021
(51) Int. Cl.: B61D 17/04, B61L 15/00

(54) **MODULARES KOMPONENTENGERÜST, WAGEN EINES SCHIENENFAHRZEUGS UND VERFAHREN ZUR HERSTELLUNG EINES WAGENS**
MODULAR COMPONENT FRAME, CARRIAGE OF A RAILWAY VEHICLE AND METHOD FOR MANUFACTURING A CARRIAGE
ÉCHAFAUDAGE À COMPOSANTS MODULAIRES, WAGON D'UN VÉHICULE FERROVIAIRE ET PROCÉDÉ DE FABRICATION D'UN WAGON

(30) Priorität: 18.12.2020 DE 102020216325
(43) Veröffentlichungstag der Anmeldung: 22.06.2022
(73) Patentinhaber: ALSTOM Holdings, 93400 Saint-Ouen-sur-Seine (FR)
(72) Erfinder: Glomb, Christian, 16766 Kremmen (DE); Karrenbauer, Denis, 13156 Berlin (DE); Lüder, Thomas, 16761 Hennigsdorf (DE); Rößler, Torsten, 16727 Velten (DE)
(74) Vertreter: Ramrath, Lukas

(56) Entgegenhaltungen:
- WO-A1-2018/197287
- DE-A1- 10 258 748
- DE-A1- 102009 059 091
- DE-A1- 102012 015 566
- DE-U1- 29 818 898
- DIETER KRAUSE ET AL: "Methoden zur Entwicklung modularer Produktfamilien", 30 January 2018 (2018-01-30), XP009532600, ISBN: 978-3-662-53039-9, Retrieved from the Internet <URL:https://ebookcentral.proquest.com/lib/epo-ebooks/reader.action?docID=5215463&ppg=163> [retrieved on 20171016]

## Beschreibung

Die Erfindung betrifft einen Wagen eines Schienenfahrzeugs sowie ein Verfahren zur Herstellung eines solchen Wagens.

Aus der EP 2 217 483 B1 ist eine Montageeinheit zur Installation in einem Wagenkastenaufbau eines Schienenfahrzeugs bekannt. Die Druckschrift offenbart eine solche Montageeinheit mit einem Träger, der im Inneren des Wagenkastenaufbaus in einem Bereich unterhalb des Wagenkastendachs befestigbar ist. Weiter umfasst die Montageeinheit mindestens eine Versorgungsleitung, die am Träger vormontiert ist, und mehrere, mit der Versorgungsleitung verbundenen Versorgungseinrichtungen bzw. Funktionsbaugruppen, die am Träger vormontiert sind. Weiter offenbart die Druckschrift ein Verfahren zum Herstellen eines Schienenfahrzeugs unter Verwendung einer derart ausgebildeten Montageeinheit, bei dem ein Wagenkastenaufbau des Schienenfahrzeugs bereitgestellt wird und der Träger im Inneren des Wagenkastenaufbaus in einem Bereich unterhalb des Wagenkastendachs befestigt wird.

Weiter bekannt ist, dass verschiedene Schienenfahrzeuge jeweils fahrzeugspezifische Wagen umfassen können, die beispielsweise voneinander verschiedene Längen aufweisen können. Auch bekannt ist, dass verschiedene Funktionalitäten in verschiedenen Schienenfahrzeugen bzw. deren Wagen bereitgestellt werden sollen.

Die WO 2018/197287 A1 offenbart betrifft eine Befestigungsvorrichtung zur Anordnung in einem Innendeckenbereich eines Wagenkastens eines Wagens eines Schienenfahrzeugs, ein Schienenfahrzeug aufweisend zumindest eine solche Befestigungsvorrichtung sowie ein Befestigungsprofil als Bestandteil der Befestigungsvorrichtung.

Die DE 10 2009 059 091 A1 offenbart eine Anordnung zur Befestigung an einer Wagenkasten-Decke eines Großraum-Fahrzeuges zur Personerbeförderung.

Die DE 102 58 748 A1 offenbart ein Versorgungsmodul für Land-, Wasser- und Luftfahrzeuge.

Die DE 10 2012 015 566 A1 offenbart eine Gepäckablage, insbesondere eine Gepäckablage für eine Passagierkabine eines Schienenfahrzeuges.

Es stellt sich daher das technische Problem, einen Wagen eines Schienenfahrzeugs sowie ein Verfahren zur Herstellung eines solchen Wagens zu schaffen, die eine einfache, kostengünstige Herstellung eines solchen Wagens ermöglichen, wobei gleichzeitig wagenspezifische Anforderungen in einfacher Weise erfüllt werden können. Insbesondere stellt sich das technische Problem, die Herstellung einer Vielzahl von voneinander verschiedenen Wagen, insbesondere von Wagen mit verschiedenen Längen und/oder verschiedener funktioneller Ausstattung, zu vereinfachen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Beschrieben wird ein modulares Komponentengerüst zur Anordnung in einem Wagen eines Schienenfahrzeugs. Das Komponentengerüst dient zur Anordnung, insbesondere zur Befestigung, von Komponenten des Wagens des Schienenfahrzeugs und kann somit auch als Komponententräger bezeichnet werden. Komponenten können Elemente, insbesondere Funktionselemente, des Wagens oder des Schienenfahrzeugs sein. Komponenten umfassen jedoch auch Verbindungselemente, z.B. zur Herstellung einer elektrischen oder fluidtechnischen Verbindung. Z.B. kann ein Verbindungselement eine elektrische Leitung sein.

Das modulare Komponentengerüst umfasst ein Gerüstmodul.

Erfindungsgemäß umfasst das Komponentengerüst mindestens ein weiteres Gerüstmodul. Somit umfasst das modulare Komponentengerüst also wenigstens zwei Module, vorzugsweise jedoch mehr als zwei, insbesondere drei, vier oder fünf Module. Ein Modul der Modulgesamtheit kann hierbei mit mindestens einem weiteren Modul mechanisch und/oder elektrisch und/oder fluidtechnisch verbunden sein.

Mindestens ein Gerüstmodul der Modulgesamtheit, mehrere, aber nicht alle Gerüstmodule der Modulgesamtheit oder aber alle Gerüstmodule der Modulgesamtheit können Befestigungsmittel oder -schnittstellen zur Befestigung an einem Wagenkasten des Wagens aufweisen oder ausbilden. Derartige Gerüstmodule können mit dem Wagenkasten mechanisch verbunden werden, beispielsweise über Montagebügel oder sonstige mechanische Verbindungsweisen, z.B. über eine Verschraubung.

Die Gerüstmodule können insbesondere in einem Deckenbereich des Wagenkastens angeordnet und dort befestigt werden. Alternativ oder kumulativ ist es jedoch, die mindestens ein Gerüstmodul in einem Bodenbereich, insbesondere einem Unterflurbereich, anzuordnen und zu befestigen. Weiter alternativ oder kumulativ ist es möglich, mindestens ein Gerüstmodul in einem Seitenwandbereich des Wagenkastens anzuordnen und zu befestigen.

Ein Gerüstmodul kann zur Aufnahme mindestens einer elektrischen Leitung dienen. Insbesondere kann ein Modul einen Leitungskanal, der auch als Kabelkanal bezeichnet werden kann, umfassen oder ausbilden. Eine elektrische Leitung kann eine Leitung zur Energieversorgung einer elektrischen oder elektronischen Komponente des Wagens dienen. Alternativ kann eine elektrische Leitung einer Signalübertragung, beispielsweise von Steuersignalen oder anderen Signalen, zu einer solchen Komponente oder von einer solchen Komponente dienen.

Insbesondere kann ein Modul Mittel zur Führung der mindestens einen elektrischen Leitung aufweisen oder ausbilden. Auch kann ein Modul Mittel zur Befestigung der mindestens einen elektrischen Leitung aufweisen oder ausbilden. Derartige Führungs- und/oder Befestigungsmittel können beispielsweise als Kabelklemme, Kabelhalterung oder sonstige Kabelführungselemente ausgebildet sein. Es ist möglich, dass derartige Führungs- und/oder Befestigungsmittel lösbar an dem Modul befestigt sind.

Insbesondere können die Führungsmittel (und gegebenenfalls die Befestigungsmittel) derart konfiguriert sein, dass eine Leitungsführung derart ermöglicht wird, dass vorbestimmte EMV-Kriterien erfüllt sind.

Weiter kann ein Gerüstmodul eine elektrische Leitung oder eine Vielzahl von elektrischen Leitungen, beispielsweise in Form eines Kabelstrangs oder Leitungsbunds, umfassen. Hierbei kann die mindestens eine elektrische Leitung, insbesondere der Kabelstrang oder Leitungsbund, eines Gerüstmoduls eine modulspezifische Länge aufweisen.

Diese können an dem Gerüstmodul vormontiert sein, insbesondere mit Mitteln zur Befestigung an dem Gerüstmodul befestigt sein. Hierbei kann die Leitung oder können die Leitungen mit durch Mittel zur Führung geführt sein, beispielsweise damit ein gewünschter Verlauf bereitgestellt wird. Weiter insbesondere kann durch ein solches Gerüstmodul ein Verlauf der elektrischen Leitung(en) gemäß einem vorbestimmten Stromlaufplan bereitgestellt sein. Auch kann durch ein solches Gerüstmodul eine gewünschte Verbindung (Verdrahtung) zwischen verschiedenen Elementen, insbesondere Funktionselementen, des Gerüstmoduls bereitgestellt sein.

Alternativ, vorzugsweise aber kumulativ, kann ein Modul mindestens einen Klimakanal umfassen oder ausbilden. Ein solcher Klimakanal kann zur Führung eines Fluidstroms, insbesondere eines Luftstroms, dienen, wobei dieser Fluidstrom zur Einstellung einer gewünschten Temperatur im Wagen des Schienenfahrzeugs, insbesondere in einem Innenraum, genutzt wird.

Mit anderen Worten kann ein Modul Bauraum für elektrische Verbindungselemente und/oder fluidtechnische Verbindungselemente umfassen oder ausbilden. Im Falle von fluidtechnischen Verbindungselementen kann der Bauraum das fluidtechnische Verbindungselemente bereitstellen. Weiterhin kann das Modul Elemente umfassen, die einen Fluideintritt oder Fluidaustritt, insbesondere eine Volumenstrommenge, steuern können. Weiter kann das Modul Elemente zur Fluidführung umfassen.

Weiter ist es möglich, dass ein Modul einen Leerkanal aufweist oder ausbildet, der zur nachträglichen Anordnung von z.B. weiteren elektrischen Leitungen dienen kann.

Es ist möglich, dass ein Modul zwei, insbesondere mindestens oder genau zwei, Leitungskanäle für elektrische Leitungen und mindestens einen, insbesondere genau einen, Klimakanal umfasst, wobei der Klimakanal zwischen den beiden Aufnahmekanälen angeordnet ist. Insbesondere kann der Klimakanal entlang einer Wagenquerrichtung zwischen den beiden Aufnahmekanälen angeordnet sein. In diesem Fall ist es möglich, dass zumindest ein Abschnitt des Klimakanals entlang einer Wagenvertikalrichtung auf gleicher Höhe wie die beiden Aufnahmekanäle angeordnet ist.

Alternativ kann ein Modul mindestens zwei, insbesondere genau zwei, Klimakanäle und mindestens einen, insbesondere genau einen, Leitungskanal für elektrische Leitungen umfassen, wobei der Aufnahmekanal zwischen den beiden Klimakanälen angeordnet ist. Auch in diesem Fall kann der Aufnahmekanal entlang der Wagenquerrichtung zwischen den beiden Klimakanälen angeordnet sein, wobei gegebenenfalls zumindest ein Abschnitt des Aufnahmekanals entlang der Wagenvertikalrichtung in gleicher Höhe wie die beiden Klimakanäle angeordnet ist.

Eine Wagenlängsrichtung kann hierbei parallel zu einer Wagenlängsachse orientiert sein, die auch als Rollachse des Wagens bezeichnet werden kann. Eine Wagenvertikalrichtung kann hierbei parallel zu einer Vertikalachse des Wagens orientiert sein, die auch als Wagengierachse oder Wagenhochachse bezeichnet werden kann. Diese kann entgegengesetzt zur Richtung einer Gravitationskraft, insbesondere von einer Wagenunterseite zu einer Wagenoberseite, orientiert sein. Weiter kann die Wagenquerrichtung parallel zu einer Wagenquerachse, die z.B. eine Wagennickachse sein kann, orientiert sein. Diese kann wiederum senkrecht zur erläuterten Wagenlängsachse und Wagenvertikalachse orientiert sein.

Weiter ist ein erstes Gerüstmodul ein Funktionsmodul. Das Funktionsmodul im Sinne dieser Offenbarung bezeichnet hierbei ein Modul mit einer Komponente oder einem (Funktions-)Element, die/das eine gewünschte, also vorbestimmte, Funktionalität bereitstellt. Eine Funktionalität kann bereitgestellt werden, wenn ein Modul bzw. mindestens eine Komponente des Moduls mindestens eine vorbestimmte Funktion ausführen kann. Somit kann ein solches Funktionsmodul auch einen Bauraum für das mindestens eine Funktionselement bereitstellen.

Mit anderen Worten ist es möglich, dass ein Modul den Bauraum zur Anordnung der erläuterten Elemente und Leitungen bereitstellt. Ist das Modul ein Funktionsmodul, so ist es zusätzlich möglich, dass das Modul ein Funktionselement umfasst.

Umfasst ein Modul sowohl ein Funktionselement als auch eine elektrische Leitung, so kann das Funktionselement mit der elektrischen Leitung verbunden sein. Ist die elektrische Leitung in einem Leitungskanal des Funktionsmoduls angeordnet, so kann ein Verbindungsabschnitt der elektrischen Leitung von dem Funktionselement zu dem/in den Leitungskanal geführt werden. Hierzu kann der Kabelkanal entsprechende Öffnungen aufweisen. Es ist möglich, dass das Funktionsmodul den Verbindungsabschnitt bereitstellt oder dieser Verbindungsabschnitt kann separat vom Funktionsmodul ausgebildet und angeordnet sein.

Weiter ist das erste Gerüstmodul ein wagenunspezifisches Standardmodul. Dies kann bedeuten, dass die Eigenschaften, z.B. eine Dimension und/oder die von dem Modul bereitgestellte Funktionalität, des Gerüstmoduls wagenunspezifisch festgelegt sind.

Ein Standardmodul kann hierbei ein Modul einer Menge von mehreren voneinander verschiedenen Standardmodulen sein. Solche Standardmodule können voneinander verschiedene Eigenschaften aufweisen. Insbesondere können diese Standardmodule voneinander verschiedene vorbestimmte Dimensionen, insbesondere Längen, aufweisen und/oder voneinander verschiedene vorbestimmte Funktionalitäten bereitstellen. Umfassen die Module einer Menge von mehreren voneinander verschiedenen Standardmodulen mindestens eine elektrische Leitung, beispielsweise in Form eines Kabelstrangs oder Leitungsbunds, so können elektrischen Leitungen verschiedener Module voneinander verschiedene modulspezifische Längen aufweisen. Es ist insbesondere möglich, dass verschiedene Standardmodule mit gleicher Länge jeweils mindestens eine elektrische Leitung, beispielsweise in Form eines Kabelstrangs oder Leitungsbunds, umfassen, wobei die elektrischen Leitungen verschiedener Module voneinander verschiedene modulspezifische Längen aufweisen. Die mindestens eine elektrische Leitung verschiedener Module können jedoch die gleichen Schnittstellen zum Anschluss aufweisen oder ausbilden, beispielsweise als Steckverbinder ausgebildete Anschlüsse.

Ein wagenunspezifisches Standardmodul bezeichnet ein Modul, welches in verschiedenen Wagen eines Schienenfahrzeugs oder in Wagen verschiedener Schienenfahrzeuge verbaubar ist, nämlich ohne eine Anpassung/Veränderung der Dimension und, in einer weiteren Ausführungsform, der bereitgestellten Funktionalität(en).

Ein wagenunspezifisches Standardmodul kann insbesondere ein wiederverwendbares Modul sein. Das kann bedeuten, dass ein in einem Wagen verwendetes Modul aus dem Wagen ausgebaut und zur weiteren Verwendung in einen davon verschiedenen Wagen eingebaut wird. Es ist hierbei insbesondere möglich, dass das Gerüstmodul ohne Veränderung der Anzahl und/oder Lage der Elemente des Gerüstmoduls wiederverwendet wird. Somit können also die Elemente des Gerüstmoduls und/oder ein durch das Gerüstmodul bereitgestellter Stromlaufplan und/oder eine durch das Gerüstmodul bereitgestellte elektrische Verbindung verschiedener Elemente und/oder Teile der mechanischen Konstruktion bzw. die mechanische Konstruktion des Gerüstmoduls wiederverwendet werden. Mit anderen Worten kann z.B. auch ein Leitungsbund des Gerüstmoduls wiederverwendet werden.

Mit anderen Worten sind Eigenschaften des wagenunspezifischen Standardmoduls schienenfahrzeug- bzw. wagenunspezifisch festgelegt, d.h. nicht an einen spezifischen Wagen bzw. ein spezifisches Schienenfahrzeug angepasst. Somit kann durch ein solches Modul auch ein wagenunspezifischer Stromlaufplan, eine wagenunspezifische elektrische Verbindung verschiedener Elemente des Moduls bereitgestellt werden.

Weiter ist das mindestens eine weitere Gerüstmodul ein wagenspezifisches Gerüstmodul.

Dies bedeutet, dass mindestens eine Eigenschaft des Gerüstmoduls wagenspezifisch festgelegt ist. So ist eine Länge des weiteren Gerüstmoduls wagenspezifisch festgelegt. Eine Länge bezeichnet hierbei eine Dimension entlang der vorhergehend erläuterten Längsachse.

Das wagenspezifische, weitere Gerüstmodul kann insbesondere kein Funktionsmodul sein. In diesem Fall kann das Modul kein nachfolgend noch näher erläutertes Funktionselement umfassen. Allerdings ist es auch möglich, dass das weitere Modul ein Funktionsmodul ist.

Erfindungsgemäß ist das wagenspezifische, weitere Gerüstmodul ein Verlängerungsmodul. Ein solches Modul kann insbesondere keine elektrische Leitung, insbesondere in Form eines Kabelstrangs oder Leitungsbunds, umfassen. Das Verlängerungsmodul kann aber Mittel zur Führung mindestens einer elektrischen Leitung aufweisen oder ausbilden. Auch kann ein Modul Mittel zur Befestigung der mindestens einen elektrischen Leitung aufweisen oder ausbilden.

Es ist in diesem Fall aber möglich, dass ein Verlängerungsmodul Funktionselement umfasst. Allerdings ist es auch möglich, dass das Verlängerungsmodul kein Funktionselement umfasst.

Durch das vorgeschlagene modulare Komponentengerüst ergibt sich in vorteilhafter Weise eine einfache Herstellung eines Wagens eines Schienenfahrzeugs (und somit auch eines Schienenfahrzeugs mit mehreren solcher Wagen), insbesondere eine einfache Herstellung von Wagen verschiedener Schienenfahrzeuge oder von verschiedenen Wagen eines Schienenfahrzeugs. Insbesondere kann nämlich zur Herstellung des Komponentengerüsts mindestens ein wagenunspezifisches Standardmodul verwendet werden. Weiter kann die wagenspezifische Anpassung des modularen Komponentengerüsts dann durch die Herstellung und weitere Verwendung eines wagenspezifischen Gerüstmoduls erfolgen.

Insbesondere kann in einfacher Weise die Länge des Komponentengerüsts an die Länge, insbesondere die Einbaulänge, des Wagens angepasst werden.

Weiter wird mindestens ein wagenunspezifisches Standardmodul und mindestens eine Verlängerungsmodul verwendet, wobei das Standardmodul mindestens eine elektrische Leitung, insbesondere in Form eines Kabelstrangs oder Leitungsbunds, umfasst, wobei die Länge der mindestens einen elektrischen Leitung des Standardmoduls derart gewählt ist, dass ein Abschnitt der elektrischen Leitung des Standardmoduls nach der Befestigung der Module aneinander in dem Verlängerungsmodul angeordnet wird. Beispielsweise kann die mindestens eine elektrische Leitung in das Verlängerungsmodul ausgerollt werden. Dort wird die mindestens eine elektrische Leitung dann in gewünschter Weise geführt angeordnet und kann gegebenenfalls auch befestigt werden. In diesem Fall kann also die Länge der mindestens einen elektrischen Leitung eines Standardmoduls länger sein als eine vom Standardmodul für die elektrische Leitung bereitgestellte Einbaulänge. Z.B. kann die Länge der mindestens eine elektrischen Leitung der vom Wagen bereitgestellten Einbaulänge für das Komponentengerüst entsprechen.

Weist ein erster Wagen eine erste Länge und ein weiterer Wagen eine weitere Länge, die kürzer als die erste Länge ist, auf, so ist es also möglich, dass zur Herstellung eines Komponentengerüsts für beide Wagen jeweils die Standardmodule mit gleicher Länge verwendet werden, wobei die elektrischen Leitungen dieser Standardmodule jedoch verschiedene Längen aufweisen.

So kann zur Herstellung eines Komponentengerüsts für den ersten Wagen ein Standardmodul mit einer elektrischen Leitung verwendet werden, die eine erste Länge aufweist. Weiter kann zur Herstellung eines Komponentengerüsts für den zweiten Wagen ein Standardmodul mit einer elektrischen Leitung verwendet werden, die eine zweite Länge aufweist, die kürzer als die erste Länge ist. Mit anderen Worten können für verschiedene Wagen die Standardmodule gleicher Länge verwendet werden, die aber kurze oder lange Kabelbäume umfassen können.

Weiter kann zur Herstellung des Komponentengerüsts für den ersten Wagen oder zur Herstellung der Komponentengerüste für beide Wagen jeweils ein Verlängerungsmodul verwendet werden, in dem dann die elektrische Leitung des Standardmoduls angeordnet wird. Längere elektrische Leitungen eines Standardmoduls können hierbei eine Flexibilität für die Verwendung in längeren Wagen bieten.

Somit lassen sich in vorteilhafter Weise ein Fertigungsaufwand zur Herstellung des Komponentengerüsts in einem Wagen eines Schienenfahrzeugs sowie auch die Herstellungskosten für den Wagen minimieren.

In einer weiteren Ausführungsform umfasst ein Funktionsmodul mindestens ein Funktionselement und mindestens ein Steuerungselement zur Steuerung des Funktionselements.

Ein Funktionselement kann insbesondere eine Lichtquelle sein, beispielsweise ein Lichtband zur Beleuchtung eines Innenraums des Wagens. Auch kann ein Funktionselement ein Lautsprecher, eine Anzeigeeinrichtung, beispielsweise ein Bildschirm, eine Heizeinrichtung, eine Kühleinrichtung oder eine Belüftungseinrichtung, z.B. in Form eines Lüfters, sein. Auch kann ein Funktionselement eine Bilderfassungseinrichtung sein, beispielsweise zur Erfassung eines (Teils des) Wageninnenraums oder eines (Teils des) Wagenaußenraums. Die Aufzählung von Funktionselementen ist hierbei beispielhaft und nicht abschließend.

Umfasst das Funktionsmodul ein Funktionselement, so kann dieses im Modul befestigt sein, beispielsweise über eine geeignete Haltevorrichtung des Moduls.

Ein Steuerungselement zur Steuerung des Funktionselements kann insbesondere eine Steuereinrichtung z.B. in Form eines Mikrocontrollers oder einer integrierten Schaltung sein. Auch das Steuerungselement kann hierbei an dem Modul befestigt sein.

Es ist weiter möglich, dass ein Funktionsmodul ein Versorgungselement zur Energieversorgung des Funktionselements und/oder des Steuerungselements umfasst.

Ein solches Energieversorgungselement kann beispielsweise eine Energiespeichereinrichtung, beispielsweise eine Batterie oder ein Akkumulator, sein. Auch kann ein Versorgungselement ein Strom- oder Spannungswandler sein, beispielsweise ein DC/DC-Wandler, ein AC/DC-Wandler oder ein DC/AC-Wandler. Auch kann ein Versorgungselement ein Transformator sein. Weiter kann ein Versorgungselement ein Verteilerelement sein. Auch das Versorgungselement kann hierbei an dem Modul befestigt sein.

Es ist ebenfalls möglich, dass ein Funktionsmodul mindestens ein Sicherungselement umfasst, beispielsweise ein Stromsicherungselement, also eine elektrische Sicherung. Auch das Sicherungselement kann hierbei an dem Modul befestigt sein.

Die verschiedenen Elemente eines Funktionsmoduls können hierbei in einer vorbestimmten, gewünschten Weise elektrisch miteinander verbunden sein. Ebenfalls ist es möglich, dass mindestens eines der Elemente über elektrische Verbindungsmittel des Funktionsmoduls mit nachfolgend noch näher erläuterten Schnittstellen des Moduls und/oder Anschlüssen des Moduls verbunden ist.

Durch die Anordnung des Funktionselements und des mindestens einen Steuerelements zur Steuerung des Funktionselements in dem Funktionsmodul ergibt sich in vorteilhafter Weise eine Dezentralisierung der zur Bereitstellung einer gewünschten Funktionalität erforderlichen Elemente und dass die gewünschte Funktionalität möglichst unabhängig von spezifischen Anforderungen externer Elemente bereitgestellt werden kann. Dies wiederum vereinfacht die Integration des Komponentengerüsts in das Schienenfahrzeug und somit auch die Herstellung. Insbesondere kann eine Länge der zur Verbindung der Elemente dienenden elektrischen Leitungen reduziert werden, da z.B. ein Funktionselement eines Moduls nicht mit einem Steuerungselement außerhalb des Moduls verbunden werden muss.

In einer weiteren Ausführungsform ist das erste Gerüstmodul ein vormontiertes Gerüstmodul. Alternativ oder kumulativ ist das weitere Gerüstmodul ein vormontiertes Gerüstmodul. Dies kann insbesondere bedeuten, dass Komponenten eines Moduls, insbesondere die vorhergehend erläuterten Elemente, aber auch die vorhergehend erläuterten elektrischen Leitungen bereits vor der Montage, insbesondere vor der Einbringung, des Moduls am/in den Wagenkasten, an dem Modul befestigt sind. Dies ermöglicht in vorteilhafter Weise eine einfache Montage der Komponenten, insbesondere da vor der Einbringung in den Wagenkasten eine einfacherere Zugänglichkeit des Moduls gegeben ist als in einem Zustand, in dem das Modul bereits im Wagenkasten angeordnet ist. Auch ermöglicht die Vormontage in vorteilhafter Weise, dass bereits vor dem Einbau in den Wagenkasten eine Funktionsprüfung durchgeführt werden kann, was wesentlich weniger aufwendig ist als bei einer bereits erfolgen Montage. Ferner kann bei einer Fehlfunktion außerhalb des Wagenkastens eine einfache Reparatur durchgeführt werden.

Die elektrische Anbindung der Komponenten eines Moduls kann dann über entsprechende Schnittstellen oder Anschlüsse des Moduls erfolgen. Diese Anschlüsse oder Schnittstellen können insbesondere zur Herstellung von Steckverbindungen zwischen zwei Modulen oder zu einem Modul dienen.

In einer weiteren Ausführungsform umfasst ein Gerüstmodul eine standardisierte Haltevorrichtung für mindestens ein Funktionselement oder bildet diese Haltevorrichtung aus. Eine solche Haltevorrichtung kann insbesondere ein sogenanntes 19-Zoll-Gerüst sein. Hierdurch wird in vorteilhafter Weise ein Einbau für standardisierte Funktionselemente vereinfacht. Dies wiederum ermöglicht eine vereinfachte Herstellung des Wagens.

Weiter erfindungsgemäß weist ein Gerüstmodul eine, insbesondere genau eine, Schnittstelle, zur elektrischen Anbindung des Gerüstmoduls auf. Dies kann bedeuten, dass die Komponenten eines Gerüstmoduls, insbesondere nur, über diese Schnittstelle mit modulexternen Komponenten elektrisch verbindbar sind.

Diese Schnittstelle kann eine Schnittstelle zur Verbindung mit mindestens einem weiteren Gerüstmodul sein. Wie vorhergehend erläutert, kann eine solche Schnittstelle zur Herstellung einer Steckverbindung zwischen den beiden Modulen ausgebildet sein. Eine Schnittstelle zur elektrischen Verbindung kann beispielsweise eine elektrische Verbindung von elektrischen Leitungen in einem Kabelkanal eines Gerüstmoduls mit elektrischen Leitungen im Kabelkanal eines weiteren Gerüstmoduls ermöglichen. Die Schnittstellen können somit einen Stecker aufweisen oder ausbilden.

Die Schnittstelle kann aber auch eine Schnittstelle zum Anschluss an elektrische Leitungen sein, die in einem modulexternen Leitungskanal des Wagens angeordnet sind. Ein solcher modulexterner Leitungskanal kann z.B. an dem Wagenkasten befestigt sein oder von diesem ausgebildet werden.

In einer weiteren Ausführungsform weist ein Gerüstmodul eine Schnittstelle zur fluidtechnischen Anbindung des Gerüstmoduls auf. Diese Schnittstelle kann eine Schnittstelle zur
fluidtechnischen Verbindung mit mindestens einem weiteren Gerüstmodul oder mit einer modulexternen Einrichtung sein. Beispielsweise kann eine solche Schnittstelle eine Verbindung zwischen einem Klimakanal des Gerüstmoduls mit einem Klimakanal eines weiteren Gerüstmoduls ermöglichen.

Hierdurch ergibt sich in vorteilhafter Weise eine einfache elektrische und/oder fluidtechnische Verbindung verschiedener Module, wodurch wiederum die Herstellung eines Wagens vereinfacht wird.

Es ist selbstverständlich auch möglich, dass ein Gerüstmodul Schnittstellen zur mechanischen Anbindung des Gerüstmoduls aufweist. Eine solche Schnittstelle kann zur Verbindung verschiedener Gerüstmodule oder zur Verbindung mit dem Wagenkasten dienen. Solche Schnittstellen können beispielsweise eine Schraubverbindung, eine Rastverbindung, eine Klemmverbindung oder eine sonstige Verbindung ermöglichen. Auch ist es möglich, dass eine Schnittstelle zur elektrischen und/oder zur fluidtechnischen Anbindung gleichzeitig als Schnittstelle zur mechanischen Verbindung ausgebildet ist.

In einer weiteren Ausführungsform weist ein Wagenendmodul zusätzlich elektrische und/oder fluidtechnische Wagenanschlüsse auf. Dies dienen zur elektrischen und/oder fluidtechnischen Anbindung des Wagenendmoduls, insbesondere zur elektrischen und/oder fluidtechnischen Verbindung mit wagenexternen Komponenten, z.B. in einem weiteren, insbesondere benachbarten, Wagen.

Ein solcher Wagenanschluss kann zur Herstellung einer Steckverbindung ausgebildet sein. Somit kann ein solcher Wagenanschluss einen Stecker umfassen oder ausbilden. Ein solcher Wagenanschluss dient hierbei nicht zur Verbindung zwischen zwei Modulen eines Wagens. Vielmehr kann ein Wagenanschluss zur elektrischen und/oder fluidtechnischen Verbindung mit einem Modul eines weiteren Wagens oder zum Anschluss von oder Verbinden mit Modulen dienen, die außerhalb des Wagens angeordnet sind, z.B. auf einem Wagendach oder in einem Wagenunterflurbereich, dienen. Allerdings kann ein solcher Anschluss auch zur Verbindung mit wagenexternen elektrischen Leitungen und/oder Klimakomponenten dienen. Hierdurch ergibt sich in vorteilhafter Weise ebenfalls eine vereinfachte Herstellung eines Wagens.

In einer weiteren Ausführungsform ist ein Standardmodul ein Beleuchtungsmodul. Ein Beleuchtungsmodul kann hierbei mindestens eine Lichtquelle als Funktionselement umfassen. Weiter kann ein Beleuchtungsmodul - wie vorhergehend erläutert - ein Steuerungselement zur Steuerung der Lichtquelle, also z.B. zur Einstellung einer Beleuchtungsintensität und/oder einer Wellenlänge der Beleuchtung, umfassen. Eine Lichtquelle kann beispielsweise als Lichtband ausgebildet sein.

Auch kann ein Standardmodul ein Spannungswandlermodul sein. Ein Spannungswandlermodul kann beispielsweise als Funktionselement einen Spannungswandler, beispielsweise einen Hochsetzsteller, einen Tiefsetzsteller, einen aktiven oder passiven Gleichrichter oder einen Wechselrichter umfassen.

Auch kann ein Standardmodul ein Spannungsverteilermodul sein. Ein Spannungsverteilermodul kann beispielsweise als Funktionselement einen Transformator umfassen, der eine Primärwindung und mindestens zwei Sekundärwindungen aufweist. Auch kann ein Spannungsverteilermodul als Funktionselement eine Verteileinrichtung umfassen, die einen Eingangsanschluss und mehrere Ausgangsanschlüsse aufweist, an die elektrische Leitungen angeschlossen werden können, wobei z.B. die Eingangsspannung am Eingangsanschluss an jedem der Ausgangsanschlüsse abgreifbar ist. Auch ist es möglich, dass die an ausgewählten Ausgangsanschlüssen abgreifbare Spannung durch eine Wandlung der Eingangsspannung hochgesetzt oder tiefgesetzt wird. In diesem Fall kann das Spannungsverteilermodul auch ein Spannungswandlermodul sein. Ferner kann ein Spannungsverteilermodul Sicherungselemente, Schaltelemente oder andere Funktionselemente einer Verteilereinrichtung umfassen.

An diese Ausgangsanschlüsse können z.B. weitere Funktionselemente bzw. Verbraucher angeschlossen werden.

Auch kann ein Standardmodul ein Lautsprechermodul sein. Ein Lautsprechermodul kann als Funktionselement mindestens einen Lautsprecher umfassen. Im Sinne dieser Offenbarung kann ein Lautsprecher eine Einrichtung zur Erzeugung akustischer Signale bezeichnen.

Auch kann ein Standardmodul ein Klimatisierungsmodul sein. Ein solches Modul kann als Funktionselement eine Heizeinrichtung, eine Kühleinrichtung oder sowohl eine Heiz- als auch eine Kühleinrichtung, die beispielsweise kombiniert oder separat voneinander ausgebildet sein können, umfassen. Weiter kann ein Klimatisierungsmodul als Funktionselement eine Einrichtung zur Erzeugung eines Fluidstroms, beispielsweise eine Pumpe oder einen Lüfter, umfassen. Weiter kann ein Klimatisierungsmodul eine Filtereinrichtung, insbesondere eine aktive Filtereinrichtung, zur Filterung des erläuterten Fluidstroms umfassen.

Auch kann ein Standardmodul ein Infotainmentmodul sein. Ein Infotainmentmodul kann als Funktionselement beispielsweise eine Anzeigeeinrichtung umfassen. Es ist möglich, dass ein Infotainmentmodul, zusätzlich zu einer Anzeigeeinrichtung, auch eine Einrichtung zur Erzeugung von akustischen Signalen als Funktionselement umfasst.

Auch kann ein Standardmodul ein Steuerungsmodul sein. Ein Steuerungsmodul kann als Funktionselement eine Steuerungselement, beispielsweise einen Mikrocontroller oder eine integrierte Schaltung, umfassen, durch die Steuersignale zur Steuerung eines Betriebs eines Funktionselements des gleichen Moduls, eines Funktionselements eines weiteren Moduls oder von modulexternen Funktionselementen erzeugt werden können. Beispielsweise kann ein solches Steuerungselement einen Betrieb von automatisch bewegbaren Türen des Wagens steuern. Insbesondere kann gesteuert werden, dass die Türen geschlossen oder geöffnet werden. Hierzu kann die Steuereinrichtung Steuersignale für entsprechende Aktoren erzeugen.

Auch kann ein Standardmodul ein Netzwerkzugangsmodul sein. Ein solches Netzwerkzugangsmodul kann als Funktionselement eine Einrichtung zur Bereitstellung eines (lokalen) Netzwerks, insbesondere eines WLAN, umfassen. Weiter kann das Modul als Funktionselement eine Einrichtung zur datentechnischen Verbindung dieses Netzwerks mit einem weiteren Netzwerk, insbesondere einem wagenexternen Netzwerk, umfassen. Mit anderen Worten kann durch das genannte Modul ein sogenannter Hotspot bereitgestellt werden, der einen Netzwerkzugangspunkt für netzwerkfähige Endgeräte im Wagen bildet. Beispielsweise können diese dann eine datentechnische Verbindung zum Internet herstellen. Das genannte Modul kann als Funktionselement alle Einrichtungen umfassen, die zur Herstellung einer solchen Verbindung notwendig sind.

Alle vorhergehend erläuterten Module umfassen mindestens ein Funktionselement, welches eine gewünschte Funktion, beispielsweise eine Beleuchtung, eine Spannungswandlung, eine Spannungsverteilung, eine Ausgabe akustischer Signale, eine Einstellung einer Temperatur, eine Informationsanzeige, eine Steuerung oder eine Bereitstellung eines Netzwerkzugangs ausführen bzw ausführen können. Die vorhergehend erläuterten Module können - wie vorhergehend erläutert - auch ein Steuerungselement zur Steuerung des Betriebs der entsprechenden Funktionselemente umfassen.

Alternativ kann ein Standardmodul ein Mischmodul aus mindestens zwei dieser Module sein. Dies kann bedeuten, dass ein Mischmodul mindestens ein Funktionselement umfasst, durch welches mindestens zwei der durch die vorhergehend erläuterten Module bereitstellbare Funktionen ausführbar/bereitstellbar sind.

Die angeführten Funktionen bilden Funktionen, die in der Regel in einem Wagen eines Schienenfahrzeugs bereitgestellt werden sollen. Solche Funktionen können Hauptversorgungsverteilungs- sowie Normstandardfunktionen sein. Durch die Integration der entsprechenden Funktionselemente in ein Standardmodul sind diese für eine Vielzahl von Wagen einsetzbar, was eine einfache Herstellung von einer Vielzahl von Wagen ermöglicht.

In einer weiteren Ausführungsform ist ein weiteres Gerüstmodul ein Brandmeldemodul. Ein Brandmeldemodul kann als Funktionselement eine Erfassungseinrichtung zur Branderfassung, insbesondere zur Raucherfassung, umfassen. Eine solche kann beispielsweise als optischer, photoelektrischer Rauchmelder oder Ionisationsrauchmelder oder als Wärmemelder, als Brandgasmelder, als CO-Melder, als Flammenmelder oder in einer alternativen Ausführungsform ausgeführter Brandmelder ausgeführt sein. Weiter kann ein Brandmeldemodul eine Einrichtung zur Ausgabe eines Warnsignals, beispielsweise eines optischen Warnsignals, eines akustischen Warnsignals oder eines Warnsignals in einer anderen Form, umfassen. Wie vorhergehend bezüglich des Standardmoduls erläutert, kann auch ein weiteres Gerüstmodul ein Steuerungselement zur Steuerung des Betriebs der Funktionselemente eines Brandmeldemoduls umfassen.

Auch kann ein weiteres Gerüstmodul ein Verbindungsmodul sein. Ein Verbindungsmodul kann hierbei ein Modul bezeichnen, welches kein Funktionselement umfassen kann.

Alternativ oder kumulativ kann ein Verbindungsmodul ein Modul sein, welches eine elektrische Verbindung zwischen zwei weiteren Modulen des Komponentengerüsts eines Wagens oder zwischen einem weiteren Modul des Komponentengerüstes und Wagenanschlüssen herstellt. Somit kann ein Verbindungsmodul die genannten Verbindungselemente wie z.B. elektrische Leitungen umfassen. Auch kann ein Verbindungsmodul Elemente zur fluidtechnischen Verbindung, beispielsweise mindestens einem Klimakanal, umfassen. Es ist möglich, dass ein Verbindungsmodul somit auch als Leitungsverlängerungsmodul ausgebildet sein kann.

So kann ein Verbindungsmodul z.B. mindestens ein Verbindungselement, aber kein Funktionselement umfassen. Auch kann ein Verbindungsmodul z.B. mindestens ein Verbindungselement, aber kein Funktionselement und kein Steuerungselement umfassen.

Da sowohl die Bereitstellung von geeigneten Verbindungen sowie eine Brandmeldefunktion in der Regel optionale Funktionen in einem Wagen eines Schienenfahrzeugs darstellen, ergibt sich in vorteilhafter Weise eine einfache Anpassung des modularen Komponentengerüsts an wagenspezifische Eigenschaften, z.B. eine Länge und/oder eine gewünschte Brandmeldefunktion. Auch kann in vorteilhafter Weise erreicht werden, dass keine derartigen, wagenspezifischen Module serienmäßig produziert werden müssen bzw. eine Produktion darauf ausgerichtet wird. Hierdurch können Herstellungskosten für den Wagen reduziert werden. Weiter kann vorteilhafter Weise eine Zusammenfassung von optionalen Funktionen in einem solchen wagenspezifischen Gerüstmodul erreicht werden.

Weiter weist ein Standardmodul eine vorbestimmte Länge auf. Die vorbestimmte Länge kann beispielsweise eine Länge aus einem Bereich von 5 m (einschließlich) bis 7 m (einschließlich) sein. Übliche Wagenlängen variieren hierbei zwischen 17 m (einschließlich) bis 30 m (einschließlich).

Alternativ weist ein Standardmodul eine Länge aus einer Menge von mindestens zwei vorbestimmten Längen auf. Die vorbestimmten Längen dieser Menge können ebenfalls aus dem erläuterten Bereich von 5 m (einschließlich) bis 7 m (einschließlich) gewählt sein. So kann eine Menge beispielsweise ein erstes Standardmodul mit einer Länge von 5 m, ein zweites Standardmodul mit einer Länge von 6 m und ein drittes Standardmodul mit einer Länge von 7 m umfassen.

Hierdurch ergibt sich in vorteilhafter Weise, dass die erläuterten Standardmodule in einer Vielzahl von Wagen, insbesondere verschiedenen Wagen eines Schienenfahrzeugs oder in Wagen verschiedener Fahrzeuge, verwendet werden können, da sie eine vorbestimmte, also wagenunspezifische, Länge aufweisen, die kleiner als eine übliche Wagengesamtlänge ist. Ferner kann eine vorbestimmte Länge eines Standardmoduls derart gewählt sein, dass diese Wagenlänge ein ganzzahliges Vielfaches der vorbestimmten Länge ist. Alternativ kann eine Länge jedoch auch derart gewählt werden, dass die Wagenlänge kein ganzzahliges Vielfaches der vorbestimmten Länge des Standardmoduls ist.

Es ist möglich, dass die Länge eines Standardmoduls bei Verwendung dieses Standardmoduls in verschiedenen Wagen mit unterschiedlicher Länge immer gleich ist und/oder einer Länge aus der erläuterten Menge von mindestens zwei vorbestimmten Längen entspricht.

In einer weiteren Ausführungsform ist ein Standardmodul ein Wagenendmodul. Ein Wagenendmodul bezeichnet hierbei ein Modul, welches an einem entlang der Längsrichtung hinteren oder vorderen, stirnseitigen Ende des Wagenkastens angeordnet ist, wenn das Komponentengerüst, welches das als Wagenendmodul ausgebildete Standardmodul umfasst, in dem Wagenkasten angeordnet ist. Ein solches Wagenendmodul kann die vorhergehend erläuterten elektrischen und/oder fluidtechnischen Wagenanschlüsse aufweisen oder ausbilden. Ein solches Standardmodul kann zusätzlich oder alternativ auch ein Beleuchtungsmodul sein. Alternativ oder kumulativ kann ein solches Modul auch ein Spannungsverteilermodul sein. Hierdurch ergibt sich in vorteilhafter Weise eine Vereinfachung der Herstellung eines Wagens eines Schienenfahrzeugs, da die in jedem Wagen vorhandenen Wagenenden mit Standardmodulen bestückt werden können, was wiederum keine wagenspezifische Herstellung von Wagenendmodulen erfordert.

In einer weiteren Ausführungsform umfasst ein Gerüstmodul mindestens ein Wandelement einer Wageninnenraumwand, insbesondere einer Fahrgastraumwand. Eine solche Wand kann hierbei vorzugsweise eine Fahrgastraumdecke sein. Alternativ ist es aber auch möglich, dass die Wageninnenraumwand eine Seitenwand oder eine Bodenwand des Fahrgastraums ist. Somit kann das Wandelement also ein Deckenelement, ein Seitenwandelement oder ein Bodenelement der Decke, der Seitenwand bzw. des Bodens des Fahrgastraums sein. Das Element kann hierbei an dem Modul befestigt sein. Alternativ ist es jedoch auch vorstellbar, dass ein Modul Befestigungselemente zur Befestigung eines entsprechenden Wandelements aufweist. Weiter ist es vorstellbar, dass ein Gerüstmodul eine elektrische Anschlusseinrichtung für den Anschluss eines externen elektrischen Geräts umfasst, beispielsweise eine Steckdose. Diese kann in das Wandelement integriert sein.

Ebenfalls ist es vorstellbar, dass das Gerüstmodul eine Eintritts- und/oder Austrittsöffnung für einen Fluidstrom zur Klimatisierung des Wageninnenraums umfasst.

Weiter ist es möglich, dass ein Gerüstmodul mindestens eine Benutzerschnittstelle zur Bedienung durch einen Benutzer, der sich im Wageninnenraum sich, umfasst. Durch eine solche Benutzerschnittstelle kann beispielsweise ein Steuersignal, beispielsweise in Form eines Soll-Werts, für den Betrieb eines Funktionselements durch einen Benutzer eingestellt werden. Die Benutzerschnittstelle kann hierbei beispielsweise ein manuell betätigbares Bedienelement, beispielsweise einen Kippschalter, einen Drehschalter oder einen Schiebeschalter, umfassen. Beispielsweise kann hiermit eine gewünschte SollTemperatur für den Wageninnenraum durch den Benutzer eingestellt werden.

Hierdurch vereinfacht sich die Herstellung des Wagens in vorteilhafter Weise weiter, da die genannten Elemente nicht nachträglich nach der Anordnung des Komponentengerüst montiert werden müssen, sondern mit der Montage des Komponentengerüsts im Wagen angeordnet werden.

Erfindungsgemäß vorgeschlagen wird ein Wagen eines Schienenfahrzeugs. Der Wagen umfasst ein modulares Komponentengerüst gemäß einer der in dieser Offenbarung beschriebenen Ausführungsformen. Vorzugsweise umfasst das modulare Komponentengerüst mindestens ein Beleuchtungsmodul, mindestens ein Spannungsverteilermodul, mindestens ein Netzwerkzugangsmodul, mindestens ein Klimatisierungsmodul, mindestens ein Infotainmentmodul, mindestens ein Lautsprechermodul oder mindestens ein Mischmodul, vorzugsweise jedoch mehrere Mischmodule, die jeweils das/die Funktionselement(e) von zwei oder mehr der genannten Module umfassen, wobei das Modul als wagenunspezifisches Standardmodul ausgebildet sein kann.

Weiter umfasst das modulare Komponentengerüst vorzugsweise ein Verbindungsmodul, insbesondere ein wagenspezifisches Verbindungsmodul. Dieses kann auch als Mischmodul des Verbindungsmoduls und eines Brandmeldemoduls ausgebildet sein.

Weiter vorzugsweise ist ein erstes Wagenendmodul ein Mischmodul aus mindestens zwei der folgenden Module: Beleuchtungsmodul, Infotainmentmodul, Netzwerkzugangsmodul, Steuerungsmodul. Weiter vorzugsweise ist ein weiteres Wagenendmodul ein Mischmodul aus mindestens zwei der folgenden Standardmodule: Beleuchtungsmodul, Infotainmentmodul, Spannungsverteilermodul. Dieses Mischmodul kann ein wagenunspezifisches Modul sein.

Weiter vorzugsweise ist ein Zwischenmodul, also ein zwischen den Wagenendmodulen angeordnetes Modul, des modularen Komponentengerüsts ein Mischmodul aus mindestens zwei der folgend genannten Module: Beleuchtungsmodul, Steuerungsmodul, insbesondere zur Türsteuerung, Netzwerkzugangsmodul, Klimatisierungsmodul. Es ist möglich, dass alle Module auch als Brandmeldemodul ausgebildet sind. Dieses Mischmodul kann ein wagenunspezifisches Modul sein.

Weiter vorzugsweise ist ein Zwischenmodul ein Verbindungsmodul oder ein Mischmodul aus Brandmeldemodul und Verbindungsmodul. Dieses Mischmodul kann ein wagenspezifisches Modul sein.

Der vorgeschlagene Wagen mit dem erläuterten modularen Komponentengerüst ist in vorteilhafter Weise einfach und kostengünstig herstellbar, wie vorhergehend erläutert.

Weiter vorgeschlagen wird ein Verfahren zur Herstellung eines Wagens eines Schienenfahrzeugs. Das Verfahren dient hierbei zur Herstellung eines Wagens gemäß einer der in dieser Offenbarung beschriebenen Ausführungsformen und umfasst somit alle hierzu notwendigen Schritte.

Insbesondere umfasst das Verfahren das Bereitstellen eines modularen Komponentengerüsts. Diese Bereitstellung umfasst das Bereitstellen eines ersten Gerüstmoduls als Funktionsmodul, was vorhergehend erläutert wurde. Diese Bereitstellung kann insbesondere die Bereitstellung eines Trägers sowie die Anordnung bzw. Befestigung von Komponenten des Funktionsmoduls an dem Träger umfassen.

Weiter umfasst die Bereitstellung des modularen Komponentengerüsts das Bereitstellen eines weiteren Gerüstmoduls. Auch diese Bereitstellung kann insbesondere die Bereitstellung eines Trägers sowie die Anordnung bzw. Befestigung von Komponenten des Moduls an dem Träger umfassen.

Weiter umfasst das Verfahren zur Herstellung des Wagens die Anordnung des modularen Komponentengerüsts in einem Wagenkasten des Wagens. Hierzu kann beispielsweise der Träger der jeweiligen Module mit dem Wagenkastenaufbau, insbesondere Elementen des Wagenkastens, mechanisch verbunden werden.

Das Verfahren kann weiter das Verbinden der Module miteinander umfassen, insbesondere also die Herstellung einer elektrischen und/oder einer fluidtechnischen Verbindung von benachbarten Modulen. Diese Verbindung kann hierbei zeitlich vor der Anordnung bzw. Integration des Komponentengerüsts im Wagenkasten erfolgen. In diesem Fall kann in vorteilhafter Weise zeitlich vor der Anordnung bzw. Integration auch eine Vorprüfung der Funktionsfähigkeit der Module erfolgen. Alternativ kann das Herstellen der erläuterten Verbindung jedoch auch nach der Anordnung der Module des modularen Komponentengerüsts in dem Wagenkasten erfolgen.

Auch kann das Verfahren die elektrische Anbindung der Module umfassen, z.B. die elektrische Verbindung mit elektrischen Verbindungselementen, die in einem modulexternen Leitungskanal des Wagens angeordnet sind.

Weiter ist das erste Gerüstmodul ein wagenunspezifisches Standardmodul und das mindestens eine weitere Gerüstmodul ein wagenspezifisches Gerüstmodul. Dies und entsprechende technische Vorteile wurden vorhergehend in Bezug auf das modulare Komponentengerüst bereits erläutert.

Weiter können die Module des Komponentengerüsts in einem unverbundenen Zustand oder in einem bereits elektrisch, fluidtechnisch und/oder mechanisch verbundenen Zustand im Wageninnenraum angeordnet werden, z.B. mittels einer geeigneten Transporteinrichtung. Beispielsweise kann das modulare Komponentengerüst über eine stirnseitige Öffnung des Wagenkastens in diesen hinein transportiert werden. Nach dem Einbringen können die Module dann miteinander verbunden werden und/oder mit dem Wagenkasten des Wagens verbunden werden.

Auch kann nach dem Verbinden eines Standardmoduls mit einem Verlängerungsmodul, also vor oder nach dem Transport in den Wageninnenraum und gegebenenfalls nach dem Verbinden der Module mit dem Wagenkasten, ein Abschnitt mindestens einer elektrischen Leitung des Standardmoduls, die beispielsweise in Form eines Kabelstrangs oder Leitungsbund ausgebildet ist, in dem Verlängerungsmodul angeordnet werden, insbesondere in dieses ausgerollt werden. Dort kann es in vorbestimmter Weise geführt angeordnet werden und gegebenenfalls befestigt werden.

In diesem Fall kann also eine elektrische Leitung eines Standardmoduls, insbesondere also ein Kabelbaum, Kabelstrang oder Leitungsbund, sich über mehrere Module erstrecken. Anschlüsse dieser elektrischen Leitung, z.B. in Form eines Steckverbinders, können somit nicht in dem Standardmodul sondern in einem weiteren Modul des Komponentengerüsts angeordnet sein.

Insgesamt ergibt sich somit eine einfache und kostengünstige Herstellung eines Wagens eines Schienenfahrzeugs.

Es ist insbesondere möglich, dass das erste Gerüstmodul ein wagenunspezifisch vorgefertigtes Modul ist, wobei ein solches wagenunspezifisches Modul zur Herstellung in einer Vielzahl von Wagen geeignet ist. Weiter ist es möglich, dass das weitere, wagenspezifische Modul speziell für die Herstellung des Wagens angefertigt wird, also ausschließlich zur Verwendung in dem herzustellenden Wagen geeignet ist.

Insbesondere kann das Bereitstellen eines Standardmoduls erfolgen, indem ein Modul aus einer Menge von vorbestimmten Standardmodulen ausgewählt wird, wobei das ausgewählte Standardmodul dann zur Anordnung in dem Wagenkasten bereitgestellt wird, z.B. angeliefert wird. Die vorbestimmten Standardmodule der Menge, aus der ausgewählt wird, können insbesondere vorgefertigte Module sein.

Mit anderen Worten kann das Komponentengerüst durch Nutzung einer Auswahlmatrix konfiguriert werden, wobei die Elemente der Auswahlmatrix Standardmodule repräsentieren kann. Somit können also die Standardmodule als Elemente der Auswahlmatrix ausgewählt werden.

Nach Auswahl des/der Standardmoduls/e des modularen Komponentengerüsts kann das Verfahren dann die Spezifikation, also die Vorgabe einer Dimension und/oder mindestens einer Funktionalität, des weiteren Gerüstmoduls sowie die Bereit- oder Herstellung dieses weiteren Gerüstmoduls umfassen.

Mit anderen Worten umfasst das Verfahren nicht die Spezifikation des Standardmoduls, also die Vorgabe einer Dimension und/oder mindestens einer Funktionalität, da dimensionelle Größen und/oder bereitzustellende Funktionen bereits spezifiziert sind.

In einer weiteren Ausführungsform wird eine Einbaulänge des Wagens bestimmt. Die Einbaulänge des Wagens bezeichnet die Länge, die für den Einbau des Komponentengerüsts vorgesehen ist. Weiter wird die Gesamtlänge aller wagenunspezifischen Standardmodule bestimmt. Erfindungsgemäß wird hiernach das mindestens eine weitere Gerüstmodul mit einer Länge bereitgestellt, die der Differenz zwischen der Einbaulänge und der Gesamtlänge aller wagenunspezifischen Standardmodule entspricht.

Selbstverständlich ist es auch möglich, mindestens zwei weitere wagenspezifische Gerüstmodule bereitzustellen, deren Gesamtlänge der Differenz zwischen der Einbaulänge und der Gesamtlänge aller wagenunspezifischen Standardmodule entspricht.

Hierdurch ergibt sich in vorteilhafter Weise eine einfache Herstellung des Wagens eines Schienenfahrzeugs und somit eines Schienenfahrzeugs.

In einer weiteren Ausführungsform ist mindestens einem vorbestimmten Abschnitt des Wagenkastens ein Standardmodul zugeordnet. Wie vorhergehend erläutert, kann einem Wagenendabschnitt beispielsweise das vorhergehend erläuterte Wagenendmodul oder eines der vorhergehend erläuterten Wagenendmodule zugeordnet sein. Weiter kann einem Türabschnitt des Wagenkastens ein Standardmodul zugeordnet sein, das als Steuerungsmodul zur Türsteuerung ausgebildet ist oder ein Funktionselement zur Türsteuerung umfasst.

Hierdurch ergibt sich in vorteilhafter Weise eine weitere Verbesserung der Herstellung, insbesondere eine Verringerung einer Verbindungslänge von elektrischen Leitungen, wodurch wiederum auch Herstellungskosten reduziert werden können.

Die Erfindung wird nachfolgend anhand von Ausführungsbeispielen näher erläutert. Die Figuren zeigen:
- Fig. 1: eine schematische Ansicht eines Wagens mit einem modularen Komponentengerüst,
- Fig. 2: ein schematischer Querschnitt durch ein modulares Komponentengerüst,
- Fig. 3a: eine schematische Seitenansicht eines erfindungsgemäßen Wagens mit einer ersten Länge,
- Fig. 3b: eine schematische Seitenansicht eines erfindungsgemäßen Wagens mit einer zweiten Länge,
- Fig. 4a: eine schematische Seitenansicht eines weiteren erfindungsgemäßen Wagens mit einer ersten Länge,
- Fig. 4b: eine schematische Seitenansicht eines weiteren erfindungsgemäßen Wagens mit einer weiteren Länge,
- Fig. 5a: eine schematische, perspektivische Ansicht eines modularen Komponentengerüsts in einer ersten Ausführungsform,
- Fig. 5b: eine schematische, perspektivische Ansicht eines modularen Komponentengerüsts gemäß einer weiteren Ausführungsform,
- Fig. 6: eine schematische, perspektivische Ansicht eines modularen Komponentengerüsts und
- Fig. 7: ein schematisches Flussdiagramm eines erfindungsgemäßen Verfahrens.

Nachfolgend bezeichnen gleiche Bezugszeichen Elemente mit gleichen oder ähnlichen technischen Merkmalen.

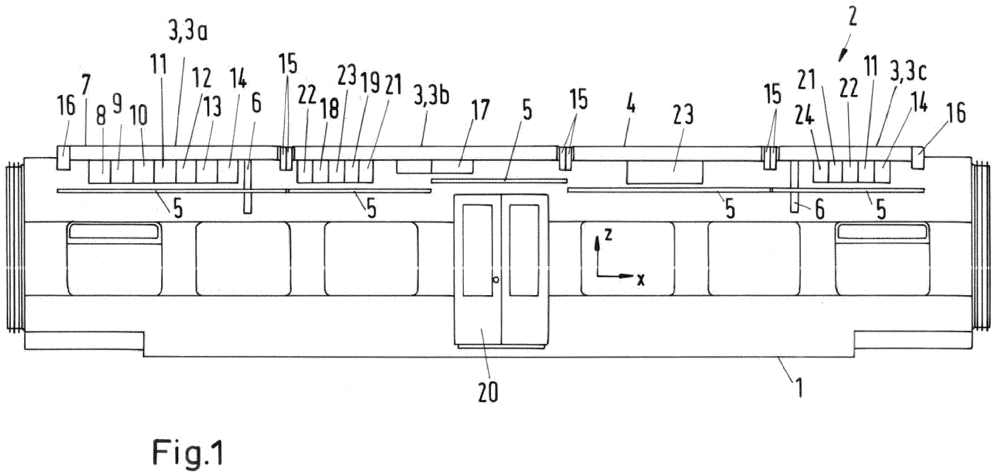

Fig. 1 zeigt eine schematische Seitenansicht eines erfindungsgemäßen Wagens 1 eines Schienenfahrzeugs mit einem erfindungsgemäßen modularen Komponentengerüst 2, welches in dem Wagen 1 angeordnet ist. Dargestellt ist, dass das modulare Komponentengerüst 2 im Deckenbereich des Wagens 1 angeordnet ist. Insbesondere kann das modulare Komponentengerüst 2 bzw. die Module 3, 4 des modularen Komponentengerüsts 2 an einem nicht in Fig. 1 dargestellten Wagenkastenaufbau des Wagens 1 befestigt sein.

Das Komponentengerüst 2 umfasst im dargestellten Ausführungsbeispiel vier Module 3, 4, wobei ein erstes Modul 3a, ein zweites Modul 3b und ein drittes Modul 3c Funktionsmodule sind und als wagenunspezifische Standardmodule ausgebildet sind. Ein viertes Modul 4 ist ein wagenspezifisches Modul. Ein Modul bezeichnet hierbei ein Gerüstmodul des modularen Komponentengerüsts 2.

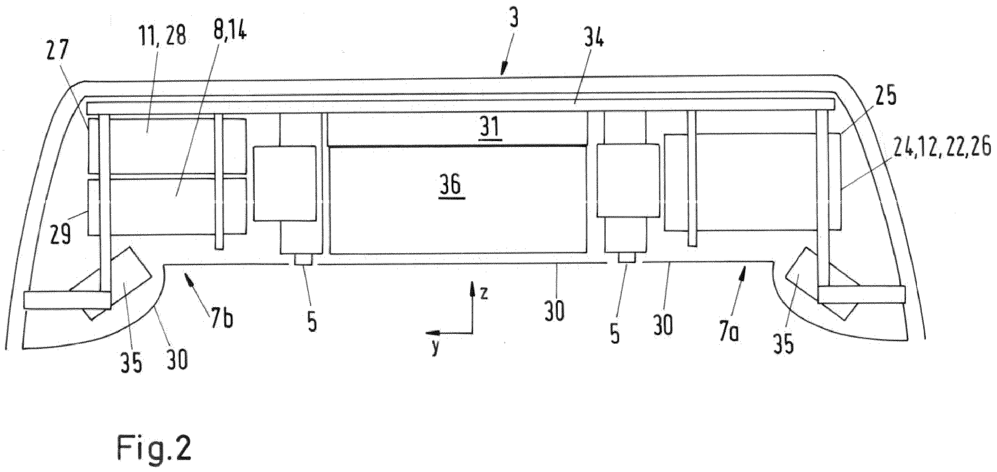

Dargestellt ist eine Wagenlängsachse x, wobei der dargestellte Pfeil der Wagenlängsachse x eine Längsrichtung symbolisiert. Ebenfalls dargestellt ist eine Wagenvertikalachse z, wobei der dargestellte Pfeil die Vertikalrichtung symbolisiert. Eine Wagenquerachse y (siehe Fig. 2) ist orthogonal zur Wagenlängsachse x und Wagenvertikalachse z orientiert, wobei die Achsen Raumachsen eines kartesischen Koordinatensystems bilden können. Dargestellt ist, dass die Module 3, 4 entlang der Wagenlängsachse x hintereinander angeordnet sind, wobei das dritte Modul 3c vor dem vierten Modul 4, das vierte Modul 4 vor dem zweiten Modul 3b und das zweite Modul 3b vor dem ersten Modul 3a angeordnet ist.

Weiter dargestellt ist, dass das erste Modul 3a eine als Lichtleiste ausgebildete Lichtquelle 5 umfasst, die ein Funktionselement des ersten Moduls 3a bildet. Weiter dargestellt ist, dass das erste Modul 3a eine Anzeigeeinrichtung 6 eines Infotainmentsystems umfasst, die ein weiteres Funktionselement des ersten Moduls 3a bildet.

Weiter dargestellt ist, dass das erste Modul 3a eine standardisierte Haltevorrichtung 7 zur Halterung von Funktionselementen umfasst.

Weiter umfasst das erste Modul 3a als Funktionselement eine GSM-Einrichtung 8 zur Herstellung einer Datenverbindung mit einem fahrzeugexternen Netzwerk, beispielsweise dem Internet. Weiter umfasst das erste Modul 3a eine Steuereinrichtung 9 zur Steuerung der Anzeigeeinrichtung 6. Die Steuereinrichtung 9 kann hierbei die Steuereinrichtung eines Infotainmentsystems im Wagen 1 sein. Weiter umfasst das erste Modul 3a eine erste Bilderfassungseinrichtung 10 zur Überwachung eines fahrzeugexternen Außenraums, beispielsweise eine Rücksehkamera, und/oder zur optischen Erfassung eines Wageninnenraums.

Weiter umfasst das erste Modul eine Speichereinrichtung 11 zur Speicherung der von der Bilderfassungseinrichtungen 10 erzeugten Signalen. Weiter dargestellt ist, dass das erste Modul eine erste Sicherungs- oder Steuereinrichtung 12 zur Sicherung/Steuerung einer Bremssteuerung und eine weitere Sicherungs- oder Steuereinrichtung 13 zur Sicherung/Steuerung einer Hochspannungsversorgung umfasst, die jeweils in Form einer Schütztafel ausgebildet sein können.

Ebenfalls umfasst das erste Modul eine Eingabe-/Ausgabeeinrichtung 14 für Nutzereingaben, die einer Steuerung des Wagens oder des Schienenfahrzeugs dienen können. Die erläuterten Einrichtungen 8, 9, 10, 11, 12, 13, 14 bilden hierbei Funktionselemente des ersten Moduls 3a. Weiter können diese jeweils ein standardisiertes Gehäuse umfassen oder in einem solchen angeordnet sein, welches an der standardisierten Haltevorrichtung 7 befestigt werden kann. Es ist natürlich denkbar, dass mehrere der genannten Einrichtungen 8,...,14 in einem gemeinsamen standardisierten Gehäuse angeordnet sind. Die erläuterten Einrichtungen 8,..., 14 können hierbei Komponenten des Moduls 3a sein.

Weiter dargestellt ist, dass das erste Modul 3a eine Schnittstelle 15 zur elektrischen und/oder fluidtechnischen Verbindung mit einem zweiten Modul 3b umfasst. Eine elektrische Schnittstelle kann z.B. als Stecker oder Steckleiste ausgebildet sein oder eine(n) solche(n) umfassen. Weiter dargestellt ist, dass das erste Modul 3a eine Anschlusseinrichtung 16 umfasst, die einen elektrischen und/oder fluidtechnischen Wagenanschluss bildet.

Das zweite Modul 3b umfasst als Funktionselemente zwei als Lichtleisten ausgebildete Lichtquellen 5. Weiter umfasst das zweite Modul 3b als weiteres Funktionselement einen Lüfter 17 einer Klimaanlage des Wagens 1, der beispielsweise mit einer Versorgungsspannung von 400 V versorgt ist. Weiter umfasst das zweite Modul 3b als Funktionselement eine Einrichtung 18 zur Bereitstellung eines drahtlosen (lokalen) Netzwerks (WLAN), welches eine Antenne sowie eine Einrichtung zur Antennensteuerung umfassen kann. Ferner umfasst das zweite Modul 3b als Funktionselement eine Steuereinrichtung 19 zur Steuerung des Betriebs von automatisiert betreibbaren Türen 20 des Wagens 1. Weiter umfasst das zweite Modul 3b als Funktionselement eine DC/DC-Wandlereinrichtung 21 zum Hoch- bzw. Tiefsetzniveaus, beispielsweise eines Spannungsniveaus von 400 V auf ein Spannungsniveau von 110 V oder umgekehrt. Weiter umfasst das zweite Modul 3b eine Leitungsschutzeinrichtung 22, beispielsweise in Form einer elektrischen Sicherung. Das zweite Modul 3b umfasst eine Rauchmeldeeinrichtung 23.

Das zweite Modul 3b umfasst zwei Schnittstellen 15 zur elektrischen und/oder fluidtechnischen Verbindung mit dem ersten Modul 3a und dem vierten Modul 4.

Das vierte Modul 4, welches als wagenspezifisches Modul ausgebildet ist, umfasst eine Lichtquelle 5 und ebenfalls eine Rauchmeldeeinrichtung 23. Ferner umfasst das vierte Modul zwei Schnittstellen 15 zur elektrischen und/oder fluidtechnischen Verbindung mit dem zweiten Modul 3b und dem dritten Modul 3c.

Das dritte Modul 3c umfasst eine weitere Anzeigeeinrichtung 6 des erläuterten Infotainmentsystems. Ferner umfasst das dritte Modul 3c eine Spannungsverteileinrichtung 24 zur Verteilung einer 110-V-Eingangsspannung an einem Eingangsanschluss auf mehrere Ausgangsanschlüsse, an denen jeweils eine 110-V-Ausgangsspannung abgreifbar ist, sowie zur Verteilung einer 400-V-Eingangsspannung an einem weiteren Eingangsanschluss auf mehrere Ausgangsanschlüsse, an denen jeweils eine 400-V-Ausgangsspannung abgreifbar ist.

Weiter umfasst das dritte Modul eine DC/DC-Wandlereinrichtung 21.

Ebenfalls dargestellt ist, dass das dritte Modul 3c eine Lichtquelle 5 umfasst. Weiter dargestellt ist, dass das dritte Modul eine Leitungsschutzeinrichtung 22, z.B. in Form einer Sicherung für ein Spannungsniveau von 400 V, umfasst. Weiter dargestellt ist, dass das dritte Modul 3c eine Bilderfassungseinrichtung 11 zur Fahrzeuginnenraumüberwachung umfasst. Ebenfalls umfasst das dritte Modul 3c eine Eingabe-/Ausgabeeinrichtung 14. Ebenfalls umfasst das dritte Modul eine Schnittstelle 15 zur elektrischen und/oder fluidtechnischen Verbindung mit dem vierten Modul 4 als auch eine Anschlusseinrichtung 16 zum elektrischen und/oder fluidtechnischen Anschluss des Wagens 1 an externe Einrichtungen.

Die Module 3, 4 sind hierbei als Mischmodule ausgebildet, die jeweils mehrere Funktionen, z.B. eine Beleuchtung und eine weitere Funktion, bereitstellen können.

Fig. 2 zeigt einen schematischen Querschnitt durch ein als Funktionsmodul 3 ausgebildetes Modul eines modularen Komponentengerüsts 2. Dargestellt ist, dass das Modul einen Träger 34 umfasst. An dem Träger 34 ist eine erste standardisierte Haltevorrichtung 7a und eine weitere standardisierte Haltevorrichtung 7b befestigt, insbesondere an freien Enden des Trägers 34 entlang einer Wagenquerachse y. Hierbei ist an der ersten standardisierten Haltevorrichtung 7a ein Gehäuse 25 befestigt, in dem eine Spannungsverteilereinrichtung 24, eine Schütztafel 12, eine DC/DC-Wandlereinrichtung 21 und eine Steuereinrichtung 26 zur Steuerung von Lichtquellen 5 angeordnet sind. An der weiteren Haltevorrichtung 7b ist ein Gehäuse 27 befestigt, in dem eine Steuereinrichtung 28 zur Steuerung von Anzeigeeinrichtungen 6 (siehe Fig. 1) und eine Speichereinrichtung 11 angeordnet ist. Ein einem weiteren Gehäuse 29, welches an der weiteren Haltevorrichtung 7b befestigt ist, ist die GSM-Einrichtung 8, die Eingabe-Ausgabeeinrichtung 14 sowie Schnittstellen zur signaltechnischen Verbindung mit den Antennen angeordnet.

Die Lichtquellen 5 sind hierbei ebenfalls an dem Träger 24 befestigt. Weiter dargestellt ist, dass weitere Leitungsschutzeinrichtungen 35 an dem Träger 24 angeordnet sind, wobei die Leitungsschutzeinrichtungen 35 in einem Voutenbereich des Wagens 1 angeordnet sind. Über diese Leitungsschutzeinrichtungen 35 können beispielsweise die Funktionselemente des Moduls 3 und/oder die in den Gehäusen 25, 27, 29 angeordneten Elemente/Einrichtungen mit einer Schnittstelle 15 oder einer Anschlusseinrichtung 16 des Moduls 3 verbunden sein. Nicht dargestellt ist, dass auch Spannungsverteileinrichtungen im Voutenbereich angeordnet sein können.

Weiter dargestellt sind Deckenelemente 30, die ebenfalls Bestandteil des Funktionsmoduls 3 sind und beispielsweise ebenfalls an dem Träger 34 befestigt sein können.

Weiter dargestellt ist ein Klimakanal 36, der von dem Modul 3 ausgebildet wird. Dieser Klimakanal 35 ist entlang der Fahrzeugquerachse y zwischen den Haltevorrichtungen 7a, 7b angeordnet.

Weiter dargestellt ist ein Leitungskanal 37, der von dem Modul 3 ausgebildet wird. Dieser Leitungskanal 37 ist entlang der Fahrzeugquerachse y zwischen den Haltevorrichtungen 7a, 7b und entlang der Wagenvertikalachse z vor bzw. über dem Klimakanal 36 angeordnet. In dem Leitungskanal 37 können elektrische Leitungen angeordnet sein, wobei die dargestellte Anordnung ermöglicht, gewünschte EMV-Kriterien zu erfüllen.

Die in diesem Leitungskanal 37 angeordneten elektrischen Leitungen können Bestandteil des Moduls 3 sein und z.B. mit einer Schnittstelle 15 oder einer Anschlusseinrichtung 16 des Moduls 3 verbunden sein und/oder mit elektrischen oder elektronischen Komponenten des Moduls 3 verbunden sein.

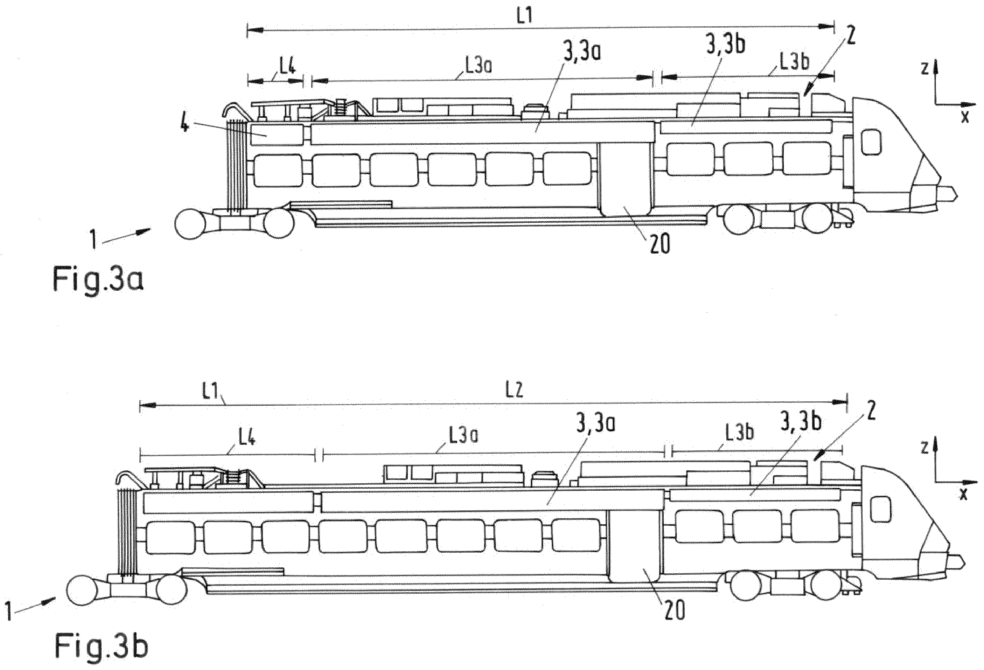

Fig. 3a zeigt eine schematische Seitenansicht eines Wagens 1 eines Schienenfahrzeugs mit einer ersten Einbaulänge L1 für das modulare Komponentengerüst 2 sowie ein modulares Komponentengerüst 2. Es ist dargestellt, dass der in Fig. 3a gezeigte Wagen 1 zwei als Funktionsmodule 3 ausgebildete Standardmodule 3a, 3b umfasst, wobei ein erstes Modul 3a eine erste vorbestimmte Modullänge L3a und das weitere Funktionsmodul 3b eine zweite vorbestimmte Modullänge L3b aufweist, wobei diese Modullängen L3a, L3b voneinander verschieden sind. Jedes Funktionsmodul 3 umfasst hierbei mindestens ein Funktionselement.

Weiter umfasst das Komponentengerüst 2 ein wagenspezifisches Verbindungsmodul 4 mit einer Modullänge L4, welches kein Funktionselement, jedoch mindestens ein Verbindungselement umfasst. Die Summe der Modullängen L3a, L3b, L4 entspricht der Einbaulänge L1. Hierbei ist die Länge der Funktionsmodule 3a, 3b vorbestimmt. Die Länge L4 des weiteren Moduls 4 wird dann als Differenz der Einbaulänge L1 und der Summe der Modullängen L3a, L3b der Funktionsmodule 3a, 3b berechnet, wobei dann das weitere Modul 4 wagenspezifisch gefertigt wird.

Fig. 3b zeigt einen Wagen 1 eines Schienenfahrzeugs mit einem modularen Komponentengerüst 2 gemäß einer weiteren Ausführungsform. Im Unterschied zu der in Fig. 3a dargestellten Ausführungsform ist die Einbaulänge L1 des in Fig. 3b dargestellten Wagens 1 größer. Allerdings ist ersichtlich, dass die Modullängen L3a, L3b der Funktionsmodule 3a, 3b gleich der Modullängen L3a, L3b der entsprechenden Funktionsmodule 3a, 3b der in Fig. 3a dargestellten Ausführungsform sind.

Im Unterschied zu der in Fig. 3a dargestellten Ausführungsform ist aber die Modullänge L4 des weiteren, wagenspezifischen Moduls 4 bei der in Fig. 3b dargestellten Ausführungsform des modularen Komponentengerüsts 2 größer als die entsprechende Modullänge L4 des weiteren Moduls 4 des in Fig. 3a dargestellten modularen Komponentengerüsts 2. Durch die Anpassung der Modullänge L4 des weiteren Moduls 4 kann also die Gesamtlänge des Komponentengerüsts 2 an die wagenspezifische Einbaulänge L1 angepasst werden. Auch das weitere Modul 4 des in Fig. 3b dargestellten modularen Komponentengerüsts 2 kann hierbei wagenspezifisch gefertigt werden.

Ebenfalls erkennbar ist, dass die Lage der Einbauabschnitte für die Funktionsmodule 3a, 3b bei beiden Wagen 1 gemäß den in Fig. 3a und Fig. 3b dargestellten Ausführungsformen gleich sind, wobei die Lage der Einbauabschnitte in diesem Fall eine Lage relativ zu einem vorderen Ende des Wagens 1 entlang der Fahrzeuglängsachse x ist.

So bildet das zweite Funktionsmodul 3b bei den in Figur 3a und Fig. 3b dargestellten Ausführungsformen jeweils ein vorderes Wagenendmodul. Hierbei ist dieses entlang der Fahrzeuglängsachse x vor dem ersten Funktionsmodul 3a angeordnet. Dieses wiederum ist in einem Deckenbereich in Fahrzeugvertikalrichtung z über einer Wagentür 20 angeordnet und kann beispielsweise als Funktionselement eine Steuereinrichtung zur Steuerung des Betriebs der automatischen Wagentür 20 umfassen.

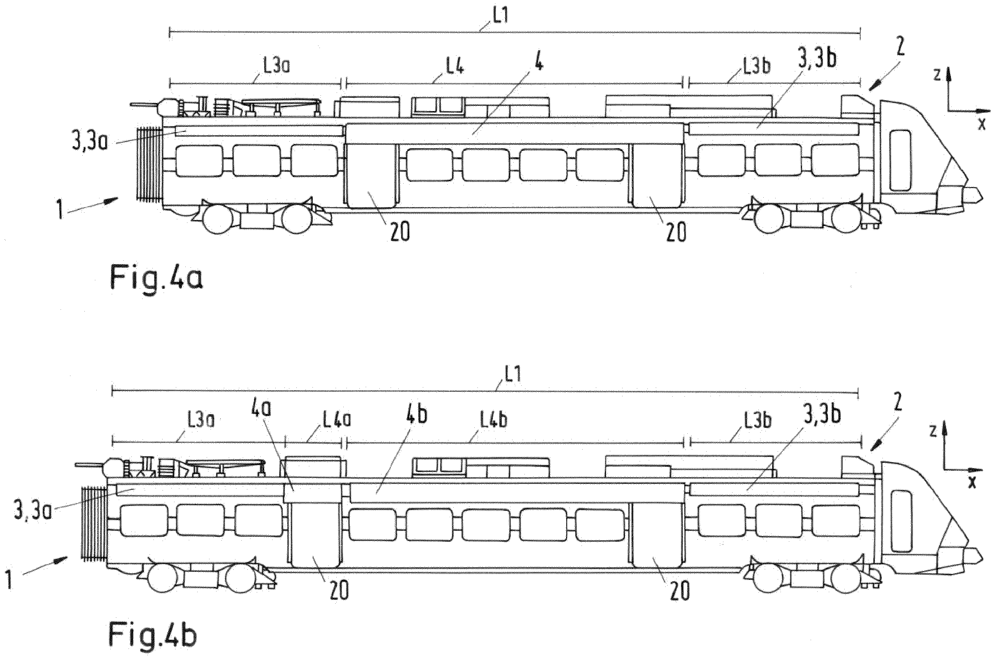

In Fig. 4a ist ein Wagen 1 eines Schienenfahrzeugs mit einem modularen Komponentengerüst 2 in einer weiteren Ausführungsform dargestellt. Das modulare Komponentengerüst umfasst ein erstes Funktionsmodul 3a und ein zweites Funktionsmodul 3b. Das erste Funktionsmodul 3a weist eine Modullänge L3a und das zweite Funktionsmodul 3b eine Modullänge L3b auf, wobei diese Längen L3a, L3b gleich sind. Die Funktionsmodule 3a, 3b sind wagenunspezifische Standardmodule. Weiter umfasst das modulare Komponentengerüst 2 ein wagenspezifisches Modul 4, welches eine Modullänge L4 aufweist.

Dargestellt ist, dass die Funktionsmodule 3a, 3b Wagenendmodule sind. Entlang der Fahrzeuglängsachse x ist hierbei das zweite Funktionsmodul 3b vor dem weiteren Modul 4, welches ein wagenspezifisches Modul ist, angeordnet. Dieses weitere Modul 4 wiederum ist vor dem ersten Funktionsmodul 3a angeordnet.

Wie auch in den Ausführungsformen, die in Fig. 3a, 3b dargestellt sind, entspricht die Summe der Modullängen L3a, L3b, L4 einer Einbaulänge L1 für das modulare Komponentengerüst 2.

In Fig. 4b ist eine weitere Ausführungsform eines modularen Komponentengerüsts 2 zur Anordnung in einem Wagen 1 eines Schienenfahrzeugs dargestellt. Im Unterschied zu der in Fig. 4a dargestellten Ausführungsform umfasst das modulare Komponentengerüst 2 zusätzlich zu den beiden Standard-Funktionsmodulen 3a, 3b zwei weitere, wagenspezifische Module 4a, 4b mit den Modullängen L4a, L4b. Die Länge der Funktionsmodule 3a, 3b entspricht hierbei der Modullängen L3a, L3b der in Fig. 4a dargestellten Ausführungsform. Im Unterschied zu der in Fig. 4a dargestellten Ausführungsform ist die Modullänge L4b des zweiten wagenspezifischen Moduls 4b länger als die des in Fig. 4a dargestellten wagenspezifischen Moduls. Durch die Integration von zwei weiteren, wagenspezifischen Modulen 4a, 4b, kann das modulare Komponentengerüst 2 an die im Vergleich zu der in Fig. 4a dargestellten Ausführungsform des Wagens 1 größere Länge des Wagens 1 und somit die größere Einbaulänge L1 angepasst werden. Ferner kann durch eine wagenspezifische Ausbildung der weiteren Module 4a, 4b eine gewünschte, wagenspezifische Funktion bereitgestellt werden. Ebenfalls ist es möglich, durch die Ausbildung eines wagenspezifischen Moduls 4a, 4b eine wagenabschnittsspezifische Funktion bereitzustellen.

Allerdings ist es auch möglich, dass z.B. das erste wagenspezifische Modul 4a ein reines Verlängerungsmodul ist, welches kein Funktionselement sondern nur Verbindungselemente zur elektrischen und/oder fluidtechnischen Verbindung zwischen dem zweiten Funktionsmodul 3b und dem zweiten weiteren Modul 4b umfasst. Allerdings ist es auch möglich, dass das Verlängerungsmodul keine Verbindungselemente umfasst und der Aufnahme von Verbindungselementen anderer Module nach deren Befestigung aneinander dient.

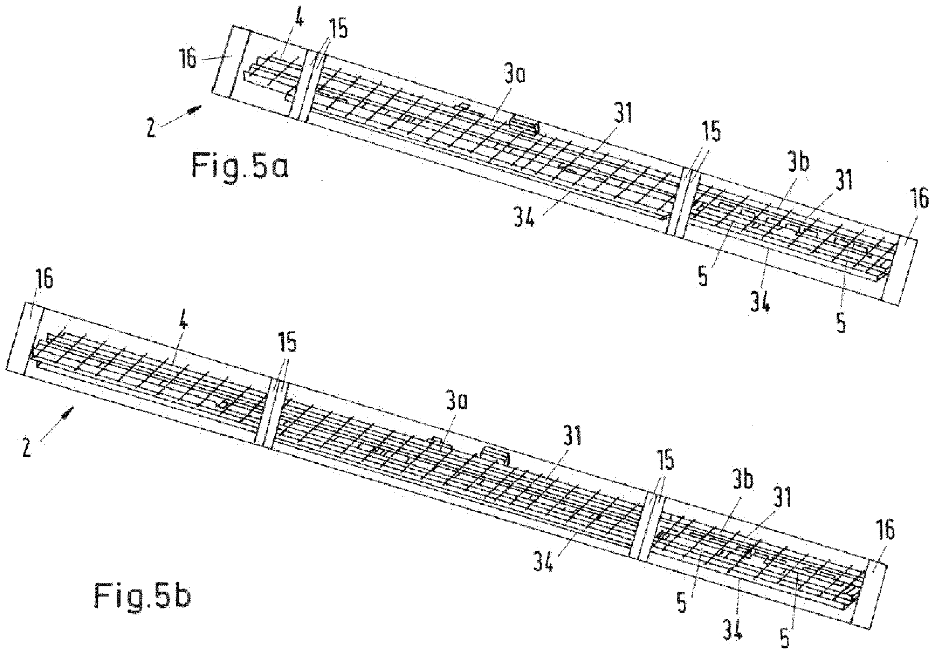

Fig. 5b zeigt eine schematische perspektivische Ansicht eines modularen Komponentengerüsts 2 der in Fig. 3a dargestellten Ausführungsform. Dargestellt ist ein wagenspezifisches Modul 4, ein erstes Funktionsmodul 3a und ein weiteres Funktionsmodul 3b, wobei die Funktionsmodule 3a, 3b Standardmodule sind. Ebenfalls ersichtlich sind Schnittstellen 15 zwischen den Modulen 3a, 3b, 4. Ersichtlich ist, dass die Funktionsmodule 3a, 3b jeweils einen Träger 34 umfassen, wobei der Träger 34 einen Leitungskanal 31 ausbildet oder aufweist. Weiter ist ersichtlich, dass das zweite Funktionsmodul 3b Lichtquellen 5 umfasst, die z.B. Funktionselemente dieses Moduls 3b bilden können. Das zweite Funktionsmodul 3b (wie auch das erste und das dritte Funktionsmodul 3a, 3c) können darüber hinaus auch Funktionselemente wie eine Steuereinrichtung 28 zur Steuerung von Anzeigeeinrichtungen 6 und eine Rauchmeldeeinrichtung 23 umfassen. Diese Steuereinrichtung 28 kann alternativ oder kumulativ zur Steuerung einer Audio-Kommunikation mit Passagieren im Wagen dienen, zum Beispiel über Lautsprecher.

Ebenfalls dargestellt ist ein Wagenanschluss 16, der von dem zweiten Funktionsmodul 3b ausgebildet wird. Ebenfalls dargestellt ist ein Wagenanschluss 16, der vom weiteren, wagenspezifischen Modul 4 ausgebildet wird. Im Unterschied zu Funktionsmodulen 3a, 3b weist das weitere Modul 4 keinen Kabelkanal auf. Das in Fig. 5a dargestellte Komponentengerüst 2 kann dem in Fig. 3a dargestellten Komponentengerüst entsprechen.

Fig. 5b zeigt eine weitere Ausführungsform des modularen Komponentengerüsts 2, die dem in Fig. 3b dargestellten Komponentengerüst 2 entspricht. Hierbei ist ersichtlich, dass die Funktionsmodule 3a, 3b gleich den in Fig. 5a dargestellten Funktionsmodulen 3a, 3b ausgebildet sind. Diese sind Standardmodule aus einer Menge vorbestimmter Standardmodule.

Im Unterschied zu der in Fig. 5a dargestellten Ausführungsform des Komponentengerüsts 2 ist jedoch die Modullänge L4 (siehe Fig. 3b) des weiteren Moduls 4 länger, wodurch das modulare Komponentengerüst an die größere Einbaulänge L1 des Wagens 1 angepasst werden kann.

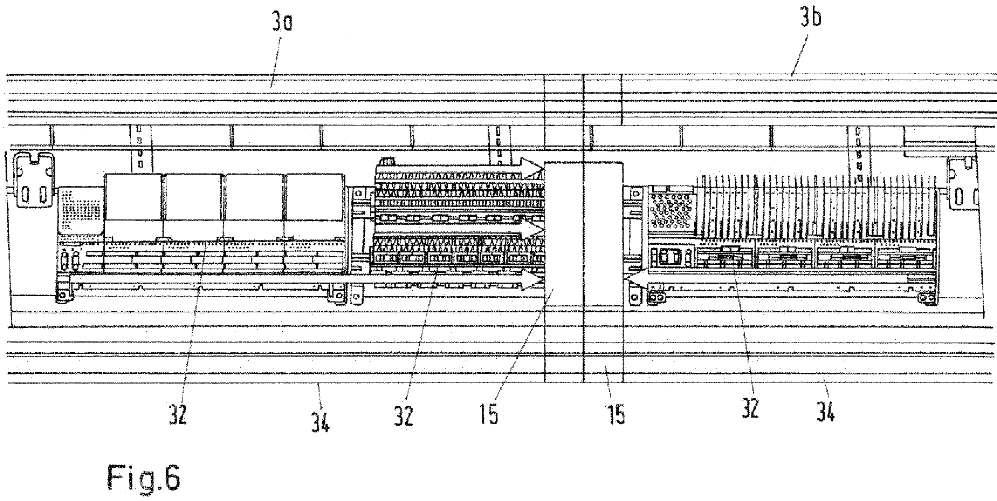

Fig. 6 zeigt eine perspektivische Ansicht von zwei Funktionsmodulen 3a, 3b, wobei jeweils der Träger 34 der Funktionsmodule 3a, 3b dargestellt sind. Weiter ersichtlich ist eine Schnittstelle 15, die einerseits zur mechanischen Verbindung der Funktionsmodule 3a, 3b ausgebildet ist, insbesondere die mechanische Verbindung der Träger 34. Ebenfalls ist die Schnittstelle 15 zur elektrischen Verbindung zwischen den Funktionsmodulen 3a, 3b, insbesondere zwischen elektrischen oder elektronischen Komponenten 32 dieser Funktionsmodule 3a, 3b, ausgebildet, die Funktionselemente der Funktionsmodule 3a, 3b bilden können. Hierbei sind die elektrischen Verbindungen der Komponenten mit der Schnittstelle durch Pfeile symbolisch dargestellt.

Die Schnittstelle 15 eines Funktionsmoduls 3a, 3b kann weiter als Schnittstelle zum Anschluss einer elektrischen Leitung dienen, die beispielsweise in einem Leitungs- oder Kabelkanal 31 (siehe Fig. 2) des jeweiligen Moduls 3a, 3b angeordnet sein kann.

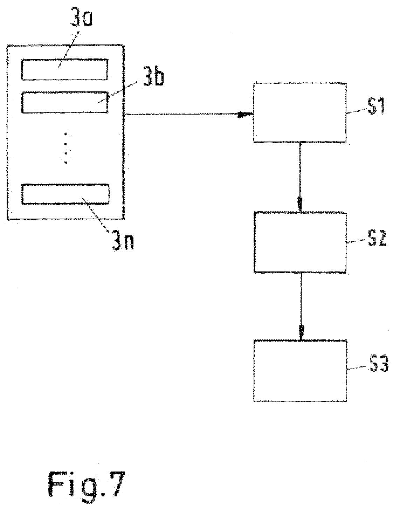

Fig. 7 zeigt ein schematisches Flussdiagramm eines erfindungsgemäßen Verfahrens zur Herstellung eines Wagens 1 (siehe Fig. 1) eines Schienenfahrzeugs. In einem ersten Schritt S1 erfolgt ein Bereitstellen eines ersten Gerüstmoduls 3a als wagenunspezifisches Standardmodul, welches z.B. aus einer Menge vorbestimmter Standardmodule 3a, 3b, ..., 3n ausgewählt wird. Selbstverständlich können im ersten Schritt S1 auch mehrere derartige Funktionsmodule ausgewählt und bereitgestellt werden.

In einem zweiten Schritt S2 erfolgt das Bereitstellen eines weiteren, wagenspezifischen Gerüstmoduls 4 (siehe z.B. Fig. 5a). Dieses weitere Gerüstmodul 4 kann hierbei im zweiten Schritt wagenspezifisch gefertigt werden.

In einem dritten Schritt S3 erfolgt das Anordnen des modularen Komponentengerüsts 2 in einem Wagenkasten des Wagens 1 des Schienenfahrzeugs.

Hierzu können die Module 3, 4 des Komponentengerüsts 2 in einem unverbundenen Zustand oder in einem bereits elektrisch, fluidtechnisch und/oder mechanisch verbundenen Zustand mittels einer geeigneten Transporteinrichtung im Wageninnenraum angeordnet werden. Beispielsweise kann die Transporteinrichtung das modulare Komponentengerüst über stirnseitige Öffnungen des Wagenkastens, z.B. eine Öffnung in einer stirnseitigen Rückwand, in diesen einbringen.

Nach der Einbringen können die Module dann miteinander verbunden werden und/oder mit dem Wagenkasten des Wagens 1 verbunden werden.

### Bezugszeichenliste

- 1: Wagen
- 2: modulares Komponentengerüst
- 3, 3a, ..., 3n: Funktionsmodul, Standardmodul, wagenunspezifisches Modul
- 4: weiteres Modul, wagenspezifisches Modul
- 5: Lichtquelle
- 6: Anzeigeeinrichtung
- 7, 7a, 7b: Halteeinrichtung
- 8: GSM-Einrichtung
- 9: Steuereinrichtung
- 10: Bilderfassungseinrichtung
- 11: Speichereinrichtung
- 12: Sicherungs- oder Steuereinrichtung
- 13: Sicherungs- oder Steuereinrichtung
- 14: Eingabe-/Ausgabeeinrichtung
- 15: Schnittstelle
- 16: Anschlusseinrichtung
- 17: Lüfter
- 18: Einrichtung zur Bereitstellung eines Netzwerks
- 19: Steuereinrichtung zur Steuerung einer Tür
- 20: Tür
- 21: DC/DC-Wandlereinrichtung
- 22: Leitungsschutzeinrichtung
- 23: Rauchmeldeeinrichtung
- 24: Spannungsverteilereinrichtung
- 25: Gehäuse
- 26: Steuereinrichtung für eine Lichtquelle
- 27: Gehäuse
- 28: Steuereinrichtung für eine Anzeigeeinrichtung
- 29: Gehäuse
- 30: Deckenelement
- 31: Leitungskanal
- 32: Komponente
- 34: Träger
- 35: Leitungsschutzeinrichtung
- 36: Klimakanal
- x: Längsrichtung
- z: Vertikalrichtung
- y: Querrichtung
- L1: Einbaulänge
- L3a: Modullänge
- L3b: Modullänge
- L4: Modullänge
- L4a: Modullänge
- L4b: Modullänge
- S1: erster Schritt
- S2: zweiter Schritt
- S3: dritter Schritt

## Patentansprüche

1. Wagen eines Schienenfahrzeugs, wobei der Wagen (1) eine Einbaulänge (L1) aufweist, wobei der Wagen (1) ein modulares Komponentengerüst zur Anordnung in einem Wagen (1) eines Schienenfahrzeugs umfasst, wobei das modulare Komponentengerüst (2) ein Gerüstmodul (3, 3a,..., 3n) umfasst, wobei das modulare Komponentengerüst (2) mindestens ein weiteres Gerüstmodul (4, 4a, 4b) umfasst, wobei ein erstes Gerüstmodul des modularen Komponentengerüsts ein Funktionsmodul (3, 3a,..., 3n) und ein wagenunspezifisches Standardmodul ist, welches in verschiedenen Wagen (1) eines Schienenfahrzeugs oder in Wagen (1) verschiedener Schienenfahrzeuge ohne eine Veränderung der Dimension verbaubar ist, wobei ein Standardmodul (3, 3a,..., 3n) eine vorbestimmte Länge (L3a, L3b) oder eine Länge (L3a, L3b) aus einer Menge von vorbestimmten Längen aufweist, wobei das mindestens eine weitere Gerüstmodul (4, 4a, 4b) ein wagenspezifisches Gerüstmodul mit einer wagenspezifisch festgelegten Länge ist, wobei das wagenspezifische Gerüstmodul (4, 4a, 4b) eine Länge aufweist, die der Differenz zwischen Einbaulänge und der Gesamtlänge aller wagenunspezifischen Standardmodule (3, 3a,..., 3n) entspricht,
**dadurch gekennzeichnet, dass** ein Gerüstmodul (3, 3a,..., 3n, 4, 4a, 4b) mindestens eine Schnittstelle (15) zur elektrischen Anbindung des Gerüstmoduls (3, 3a,..., 3n, 4, 4a, 4b) aufweist, wobei das wagenunspezifische Standardmodul mindestens eine elektrische Leitung umfasst, und wobei das wagenspezifische Gerüstmodul (4, 4a. 4b) ein Verlängerungsmodul ist, welches zur Anordnung eines Abschnitts der elektrischen Leitung des Standardmoduls (3, 3a, ..., 3n) dient, wobei der Abschnitt der elektrischen Leitung des Standardmoduls (3, 3a, ..., 3n) in dem Verlängerungsmodul angeordnet ist.

2. Wagen nach Anspruch 1, **dadurch gekennzeichnet, dass** ein Funktionsmodul mindestens ein Funktionselement und mindestens eine Steuerungselement zur Steuerung des Funktionselements umfasst.

3. Wagen nach einem der vorhergehenden Ansprüche, **dadurch gekennzeichnet, dass** das erste Gerüstmodul (3, 3a,... , 3n) und/oder das weitere Gerüstmodul (4, 4a, 4b) ein vormontiertes Gerüstmodul ist.

4. Wagen nach einem der vorhergehenden Ansprüche, **dadurch gekennzeichnet, dass** ein Gerüstmodul (3, 3a,..., 3n, 4, 4a, 4b) eine standardisierte Haltevorrichtung (7, 7a, b) für mindestens ein Funktionselement umfasst oder ausbildet.

5. Wagen nach einem der vorhergehenden Ansprüche, **dadurch gekennzeichnet, dass** ein Gerüstmodul (3, 3a,..., 3n, 4, 4a, 4b) mindestens eine Schnittstelle (15) zur fluidtechnischen Anbindung des Gerüstmoduls (3, 3a,..., 3n, 4, 4a, 4b) aufweist.

6. Wagen nach Anspruch 5, **dadurch gekennzeichnet, dass** ein Wagenendmodul zusätzlich elektrische und/oder fluidtechnischen Wagenanschlüsse (16) aufweist.

7. Wagen nach einem der vorhergehenden Ansprüche, **dadurch gekennzeichnet, dass** ein Standardmodul (3, 3a,..., 3n) ein Beleuchtungsmodul, ein Spannungswandlermodul, ein Spannungsverteilermodul, ein Lautsprechermodul, ein Klimatisierungsmodul, ein Infotainmentmodul, ein Steuerungsmodul, ein Netzwerkzugangsmodul oder ein Mischmodul aus mindestens zwei dieser Module ist.

8. Wagen nach einem der vorhergehenden Ansprüche, **dadurch gekennzeichnet, dass** ein weiteres Gerüstmodul (4, 4a, 4b) ein Brandmeldemodul oder ein Verbindungsmodul ist.

9. Wagen nach einem der vorhergehenden Ansprüche, **dadurch gekennzeichnet, dass** ein Standardmodul (3, 3a,..., 3n) ein Wagenendmodul ist.

10. Wagen nach einem der vorhergehenden Ansprüche, **dadurch gekennzeichnet, dass** ein Gerüstmodul (3, 3a,..., 3n, 4, 4a, 4b) mindestens ein Wandelement einer Wageninnenraumwand umfasst.

11. Verfahren zur Herstellung eines Wagens (1) eines Schienenfahrzeugs nach einem der Ansprüche 1 bis 10, wobei der Wagen (1) eine Einbaulänge (L1) aufweist, wobei
- ein modulares Komponentengerüst (2) bereitgestellt wird, indem
i. ein erstes Gerüstmodul als Funktionsmodul (3, 3a,..., 3n) bereitgestellt wird und
ii. mindestens ein weiteres Gerüstmodul (4, 4a, 4b) bereitgestellt wird,
- das modulare Komponentengerüst (2) in einem Wagenkasten des Wagens (1) angeordnet wird,
wobei
das erste Gerüstmodul ein wagenunspezifisches Standardmodul ist, welches in verschiedenen Wagen (1) eines Schienenfahrzeugs oder in Wagen (1) verschiedener Schienenfahrzeuge ohne eine Veränderung der Dimension verbaubar ist, wobei ein Standardmodul (3, 3a,..., 3n) eine vorbestimmte Länge (L3a, L3b) oder eine Länge (L3a, L3b) aus einer Menge von vorbestimmten Längen aufweist, und das mindestens eine weitere Gerüstmodul (4, 4a, 4b) ein wagenspezifisches Gerüstmodul ist, dessen Länge wagenspezifisch festgelegt ist, wobei das wagenspezifische Gerüstmodul (4, 4a, 4b) eine Länge aufweist, die der Differenz zwischen Einbaulänge und der Gesamtlänge aller wagenunspezifischen Standardmodule (3, 3a,..., 3n) entspricht, **dadurch gekennzeichnet, dass** ein Gerüstmodul (3, 3a,..., 3n, 4, 4a, 4b) mindestens eine Schnittstelle (15) zur elektrischen Anbindung des Gerüstmoduls (3, 3a,..., 3n, 4, 4a, 4b) aufweist, wobei das wagenunspezifische Standardmodul mindestens eine elektrische Leitung umfasst, und wobei das wagenspezifische Gerüstmodul (4, 4a, 4b) ein Verlängerungsmoduls ist, welches zur Anordnung eines Abschnitts der elektrischen Leitung des Standardmoduls (3, 3a, ..., 3n) dient, wobei der Abschnitt der elektrischen Leitung des Standardmoduls (3, 3a, ..., 3n) in dem Verlängerungsmodul angeordnet ist.

12. Verfahren nach Anspruch 11, **dadurch gekennzeichnet, dass** eine Einbaulänge (L1) des Wagens (1) und die Gesamtlänge aller wagenunspezifischen Standardmodule (3, 3a,..., 3n) bestimmt wird, wobei das mindestens eine weitere Gerüstmodul (4, 4a, 4b) mit einer Länge (L4, L4a, L4b) bereitgestellt wird, die der Differenz zwischen der Einbaulänge (L1) und der Gesamtlänge aller wagenunspezifischen Standardmodule (3, 3a,..., 3n) entspricht.

13. Verfahren nach Anspruch 11 oder 12, **dadurch gekennzeichnet, dass** mindestens einem vorbestimmten Abschnitt des Wagenkastens ein Standardmodul (3, 3a,..., 3n) zugeordnet ist.

14. Schienenfahrzeug mit mehreren Wägen (1), wobei jeder Wagen (1) gemäß einem der Ansprüche 1 bis 10 ausgebildet ist.

15. Schienenfahrzug nach Anspruch 14, **dadurch gekennzeichnet, dass** ein erster Wagen (1) eine erste Einbaulänge (L1) und ein weiterer Wagen (1) eine weitere Einbaulänge, die kürzer als die erste Einbaulänge ist, aufweist, wobei die Komponentengerüste der Wägen (1) jeweils mit Standardmodulen mit gleicher Länge bereitgestellt sind.

## Claims

1. Car of a rail vehicle, wherein the car (1) has an installation length (L1), wherein the car (1) comprises a modular component frame for arrangement in a car (1) of a rail vehicle, wherein the modular component frame (2) comprises a frame module (3, 3a, ..., 3n), wherein the modular component frame (2) comprises at least one further frame module (4, 4a, 4b), wherein a first frame module of the modular component frame is a function module (3, 3a, ..., 3n) and a non-car-specific standard module which can be installed without any change in dimension in different cars (1) of a rail vehicle or in cars (1) of different rail vehicles, wherein a standard module (3, 3a, ..., 3n) has a predetermined length (L3a, L3b) or a length (L3a, L3b) from a set of predetermined lengths, wherein the at least one further frame module (4, 4a, 4b) is a car-specific frame module with a car-specific length, wherein the at least one further frame module has a length, which is equal to the difference between the installation length and the total length of all non-car-specific standard modules (3, 3a, ..., 3n)
**characterized in that** a frame module (3, 3a, ..., 3n, 4, 4a, 4b) has at least one interface (15) for electrical connection of the frame module (3, 3a, ..., 3n, 4, 4a, 4b), wherein the car-specific frame module (4, 4a, 4b) is an extension module which serves to arrange a section of an electrical line of the standard module (3, 3a, ..., 3n), wherein the section of the electrical line of the standard module (3, 3a, ..., 3n) is arranged in the extension module.

2. Car according to claim 1, **characterized in that** a function module comprises at least one function element and at least one control element for controlling the function element.

3. Car according to one of the preceding claims, **characterized in that** the first frame module (3, 3a, ..., 3n) and/or the further frame module (4, 4a, 4b) is a preassembled frame module.

4. Car according to one of the preceding claims, **characterized in that** a scaffolding module (3, 3a, ..., 3n, 4, 4a, 4b) comprises or forms a standardized holding device (7, 7a, b) for at least one functional element.

5. Car according to one of the preceding claims, **characterized in that** a frame module (3, 3a, ..., 3n, 4, 4a, 4b) has at least one interface (15) for fluid connection of the frame module (3, 3a, ..., 3n, 4, 4a, 4b).

6. Car according to claim 5, **characterized in that** a car end module additionally has electrical and/or fluid car connectors (16).

7. Car according to one of the preceding claims, **characterized in that** a standard module (3, 3a, ..., 3n) is a lighting module, a voltage converter module, a voltage distribution module, a loudspeaker module, an air conditioning module, an infotainment module, a control module, a network access module, or a mixed module comprising at least two of these modules.

8. Car according to one of the preceding claims, **characterized in that** a further frame module (4, 4a, 4b) is a fire alarm module or a connection module.

9. Car according to one of the preceding claims, **characterized in that** a standard module (3, 3a, ..., 3n) is a car end module.

10. Car according to one of the preceding claims, **characterized in that** a frame module (3, 3a, ..., 3n, 4, 4a, 4b) comprises at least one wall element of a car interior wall.

11. Method for manufacturing a car (1) of a rail vehicle according to one of claims 1 to 10, wherein the car (1) has an installation length (L1), wherein
- a modular component frame (2) is provided by
i. providing a first frame module as a functional module (3, 3a, ..., 3n) and
ii. providing at least one further frame module (4, 4a, 4b),
- the modular component frame (2) is arranged in a car body of the car (1),
wherein
the first frame module is a non-car-specific standard module that can be installed without any change in dimensions in different cars (1) of a rail vehicle or in cars (1) of different rail vehicles, wherein a standard module (3, 3a, ..., 3n) has a predetermined length (L3a, L3b) or a length (L3a, L3b) from a set of predetermined lengths, and the at least one further frame module (4, 4a, 4b) is a car-specific frame module whose length is specified for a specific car, wherein the car-specific frame module (4, 4a, 4b) has a length that is equal to the difference between the installation length and the total length of all non-car-specific standard modules (3, 3a, ..., 3n), **characterized in that** a frame module (3, 3a, ..., 3n, 4, 4a, 4b) has at least one interface (15) for electrical connection of the frame module (3, 3a, ..., 3n, 4, 4a, 4b), wherein the car-specific frame module (4, 4a, 4b) is an extension module which serves to arrange a section of an electrical line of the standard module (3, 3a, ..., 3n), wherein the section of the electrical line of the standard module (3, 3a, ..., 3n) is arranged in the extension module.

12. Method according to claim 11, **characterized in that** an installation length (L1) of the car (1) and the total length of all non-car-specific standard modules (3, 3a, ..., 3n) are determined, wherein the at least one further frame module (4, 4a, 4b) is provided with a length (L4, L4a, L4b) that is equal to the difference between the installation length (L1) and the total length of all non-car-specific standard modules (3, 3a, ..., 3n).

13. Method according to claim 11 or 12, **characterized in that** at least one predetermined section of the car body is assigned a standard module (3, 3a.,..., 3n).

14. Rail vehicle with multiple cars (1), wherein each car (1) is designed in accordance with one of claims 1 to 10.

15. Rail vehicle according to claim 14, **characterized in that** a first car (1) has a first installation length (L1) and a further car (1) has a further installation length that is shorter than the first installation length, wherein the component frames of the cars (1) are each provided with standard modules of equal length.

## Revendications

1. Wagon d'un véhicule ferroviaire, dans lequel le wagon (1) comprend une longueur d'installation (L1), dans lequel le wagon (1) comprend une structure modulaire des composants destinée à être disposé dans un wagon (1) d'un véhicule ferroviaire, dans lequel la structure modulaire des composants (2) comprend un module de structure (3, 3a, ..., 3n), dans lequel la structure modulaire des composants (2) comprend au moins un autre module de structure (4, 4a, 4b), dans lequel un premier module de structure de la structure modulaire des composants est un module fonctionnel (3, 3a, ..., 3n) et un module standard non spécifique à un wagon, qui est installable dans différents wagons (1) d'un véhicule ferroviaire ou dans des wagons (1) de différents véhicules ferroviaires sans une modification des dimensions, dans lequel un module standard (3, 3a, ..., 3n) comprend une longueur prédéterminée (L3a, L3b) ou une longueur (L3a, L3b) parmi une quantité de longueurs prédéterminées, dans lequel le au moins un autre module de structure (4, 4a, 4b) est un module de structure spécifique à un wagon avec une longueur spécifiée pour le wagon, dans lequel le module de structure spécifique à un wagon (4, 4a, 4b) comprend une longueur qui correspond à la différence entre la longueur d'installation et la longueur totale de tous les modules standard non spécifiques à un wagon (3, 3a, ..., 3n),
**caractérisé en ce qu'**un module de structure (3, 3a, ..., 3n, 4, 4a, 4b) comporte au moins une interface (15) pour la connexion électrique du module de structure (3, 3a, ..., 3n, 4, 4a, 4b), dans lequel le module standard non spécifique à un wagon comprend au moins une ligne électrique, et dans lequel le module de structure spécifique à un wagon (4, 4a, 4b) est un module d'extension qui sert à l'agencement d'une section de la ligne électrique du module standard (3, 3a, ..., 3n), dans lequel la section de la ligne électrique du module standard (3, 3a, ..., 3n) est disposé dans le module d'extension.

2. Wagon selon la revendication 1, **caractérisé en ce qu'**un module fonctionnel comprend au moins un élément fonctionnel et au moins un élément de commande pour commander l'élément fonctionnel.

3. Wagon selon l'une quelconque des revendications précédentes, **caractérisé en ce que** le premier module de structure (3, 3a, ..., 3n) et/ou l'autre module de structure (4, 4a, 4b) est un module de structure préassemblé.

4. Wagon selon l'une quelconque des revendications précédentes, **caractérisé en ce qu'**un module de structure (3, 3a, ..., 3n, 4, 4a, 4b) comprend ou forme un dispositif de fixation standardisé (7, 7a, b) pour au moins un élément fonctionnel.

5. Wagon selon l'une quelconque des revendications précédentes, **caractérisé en ce qu'**un module de structure (3, 3a, ..., 3n, 4, 4a, 4b) comporte au moins une interface (15) pour le raccordement fluidique du module de structure (3, 3a, ..., 3n, 4, 4a, 4b).

6. Wagon selon la revendication 5, **caractérisé en ce qu'**un module d'extrémité de wagon comporte en outre des raccords électriques et/ou fluidiques (16) pour le wagon.

7. Wagon selon l'une quelconque des revendications précédentes, **caractérisé en ce qu'**un module standard (3, 3a, ..., 3n) est un module d'éclairage, un module convertisseur de tension, un module de distribution de tension, un module haut-parleur, un module de climatisation, un module d'infodivertissement, un module de commande, un module d'accès au réseau ou un module mixte comprenant au moins deux de ces modules.

8. Wagon selon l'une quelconque des revendications précédentes, **caractérisé en ce qu'**un autre module de structure (4, 4a, 4b) est un module d'alarme incendie ou un module de connexion.

9. Wagon selon l'une quelconque des revendications précédentes, **caractérisée en ce qu'**un module standard (3, 3a, ..., 3n) est un module d'extrémité de wagon.

10. Wagon selon l'une quelconque des revendications précédentes, **caractérisée en ce qu'**un module de structure (3, 3a, ..., 3n, 4, 4a, 4b) comprend au moins un élément de paroi d'une paroi intérieure de wagon.

11. Procédé de fabrication d'un wagon (1) d'un véhicule ferroviaire selon l'une quelconque des revendications 1 à 10, dans lequel le wagon (1) comprend une longueur d'installation (L1), dans lequel
- une structure modulaire des composants (2) est fournie par
i. un premier module de structure est fourni en tant que module fonctionnel (3, 3a, ..., 3n) et
ii. au moins un autre module de structure (4, 4a, 4b) est fourni,
- la structure modulaire des composants (2) est disposé dans une caisse du wagon (1),
dans lequel
le premier module de structure est un module standard non spécifique à un wagon, qui est installable dans différents wagons (1) d'un véhicule ferroviaire ou dans des wagons (1) de différents véhicules ferroviaires sans une modification des dimensions, dans lequel un module standard (3, 3a, ..., 3n) comprend une longueur prédéterminée (L3a, L3b) ou une longueur (L3a, L3b) parmi une quantité de longueurs prédéterminées, et le au moins un autre module de structure (4, 4a, 4b) est un module de structure spécifique à un wagon dont la longueur est spécifiée pour le wagon spécifique, dans lequel le module de structure spécifique à un wagon (4, 4a, 4b) comprend une longueur qui correspond à la différence entre la longueur d'installation et la longueur totale de tous les modules standard non spécifiques à un wagon (3, 3a, ..., 3n), **caractérisé en ce qu'**un module de structure (3, 3a, ..., 3n, 4, 4a, 4b) comporte au moins une interface (15) pour la connexion électrique du module de structure (3, 3a, ..., 3n, 4, 4a, 4b), dans lequel le module standard non spécifique à un wagon comprend au moins une ligne électrique, et dans lequel le module de structure spécifique à un wagon (4, 4a, 4b) est un module d'extension qui sert à l'agencement d'une section de la ligne électrique du module standard (3, 3a, ..., 3n), dans lequel la section de la ligne électrique du module standard (3, 3a, ..., 3n) est disposé dans le module d'extension.

12. Procédé selon la revendication 11, **caractérisé en ce qu'**une longueur d'installation (L1) du wagon (1) et la longueur totale de tous les modules standard non spécifiques à un wagon (3, 3a, ..., 3n) sont déterminées, dans lequel le au moins un autre module de wagon (4, 4a, 4b) est fourni avec une longueur (L4, L4a, L4b) qui correspond à la différence entre la longueur d'installation (L1) et la longueur totale de tous les modules standard non spécifiques à un wagon (3, 3a, ..., 3n).

13. Procédé selon la revendication 11 ou 12, **caractérisé en ce qu'**un module standard (3, 3a, ..., 3n) est associé à au moins une section prédéterminée de la caisse du wagon.

14. Véhicule ferroviaire comprenant plusieurs wagons (1), dans lequel chaque wagon (1) est conçu selon l'une quelconque des revendications 1 à 10.

15. Véhicule ferroviaire selon la revendication 14, **caractérisé en ce qu'**un premier wagon (1) comprend une première longueur d'installation (L1) et un autre wagon (1) comprend une autre longueur d'installation qui est plus courte que la première longueur d'installation, dans lequel les structures des composants des wagons (1) sont dans chaque cas fournies avec des modules standard de longueur égale.
